# EUROPÄISCHE PATENTSCHRIFT

(11) **EP 3 825 186 B1**
(45) Veröffentlichungstag und Bekanntmachung des Hinweises auf die Patenterteilung: **30.04.2025**
(21) Anmeldenummer: 21150151.5
(22) Anmeldetag: 09.05.2017
(51) Int. Cl.: B60R 16/02

(54) **KABELBAUM, FORM UND FORMSYSTEM**
WIRING HARNESS, MOULD AND MOULD SYSTEM
FAISCEAU DE CÂBLES, MOULE ET SYSTÈME DE MOULAGE

(30) Priorität: 09.05.2016 DE 102016108522
(43) Veröffentlichungstag der Anmeldung: 26.05.2021
(62) Teilanmeldung aus: 17723332.7
(73) Patentinhaber: Yazaki Systems Technologies GmbH, 93059 Regensburg (DE)
(72) Erfinder: EINERT, Martin, 93077 Bad Abbach (DE); RODERER, Götz, 93105 Tegernheim (DE); NAVARRO MÁLAGA, Aldo, 73730 Esslingen am Neckar (DE); VON KNORRE, Dietrich, 27777 Ganderkesee (DE); NEAL, Adam, Welwyn Garden City, Hertfordshire AL8 6SR (GB)
(74) Vertreter: Patentanwaltskanzlei WILHELM & BECK

(56) Entgegenhaltungen:
- EP-A1- 2 535 902
- EP-A2- 0 787 626
- DE-A1- 10 328 688
- DE-C1- 19 728 286
- US-A1- 2013 277 087
- US-A1- 2014 190 741
- US-A1- 2014 190 742

## Beschreibung

Die Erfindung betrifft einen Kabelbaum gemäß Patentanspruch 1eine Form zur Herstellung eines Kabelbaums gemäß Patentanspruch 2 und ein Formsystem gemäß Patentanspruch 8.

Es sind Kabelbäume mit einzelnen Kabeln zur Verbindung unterschiedlicher Komponenten in einem Kraftfahrzeug bekannt. Dabei werden die Kabel auf einem Montagebrett gezogen und mittels eines Wickelbands umwickelt. Das Herstellen des Kabelbaums erfolgt im Wesentlichen manuell, sodass die Herstellung des Kabelbaums besonders kostenintensiv ist.

So ist aus EP 0 787 626 A2 und US 2014/190742 A2 ein Kabelbaum bekannt. Die US 2014/190742 A2 zeigt ferner auch eine Form zur Herstellung des Kabelbaums.

Es ist Aufgabe der Erfindung, einen verbesserten Kabelbaum, eine verbesserte Form und ein verbessertes Formsystem bereitzustellen.

Diese Aufgabe wird mittels eines Kabelbaums für ein Kraftfahrzeug gemäß Anspruch 1 gelöst. Vorteilhafte Ausführungsformen sind in den abhängigen Ansprüchen angegeben. Es wurde erkannt, dass ein verbesserter Kabelbaum für ein Kraftfahrzeug dadurch bereitgestellt werden kann, dass der Kabelbaum ein Kabelbündel mit wenigstens zwei Kabeln und einer Ummantelung aufweist. Das Kabelbündel ist zumindest abschnittsweise in der Ummantelung eingebettet. Die Ummantelung weist einen Übergangsabschnitt auf. Der Übergangsabschnitt ist zwischen dem ersten Ummantelungsabschnitt und dem zweiten Ummantelungsabschnitt angeordnet. Der erste Ummantelungsabschnitt weist eine erste Seitenfläche und der zweite Ummantelungsabschnitt weist eine zweite Seitenfläche auf. Der Übergangsabschnitt weist eine Übergangsfläche auf, die eine Neigung gegenüber der ersten Seitenfläche und der zweiten Seitenfläche aufweist. Die Neigung weist einen Winkel auf, wobei der Winkel einen Wert aufweist, der kleiner als 45°, insbesondere kleiner als 30°, insbesondere kleiner als 20°, insbesondere kleiner als 15°, insbesondere kleiner als 10°, ist.

Auf diese Weise kann auf ein aufwendiges Wickeln des Kabelbündels verzichtet werden.

Ferner sorgt die Ummantelung dafür, dass der Kabelbaum besonders leicht geknickt und um enge Radien geführt werden kann. Auch sind die einzelnen Kabel des Kabelbündels durch die Ummantelung geschützt.

In einer nicht beanspruchten Ausführungsform weist die Ummantelung außenseitig ein Signalisierungselement auf, wobei das Signalisierungselement parallel zum Kabelbündel zur Signalisierung einer Position des Kabelbündels geführt ist, wobei sich das Signalisierungselement sich vorzugsweise im Wesentlichen über die gesamte Längserstreckung der Ummantelung erstreckt, wobei das Signalisierungselement zumindest abschnittsweise korrespondierend zu einer geometrischen Ausgestaltung einer Halteeinrichtung einer Form ausgebildet ist. Mittels der ersten Ausbuchtung kann einfach die Ausrichtung des Kabelbündels in der Ummantelung signalisiert werden, sodass der Kabelbaum besonders schnell in dem Kraftfahrzeug verlegt werden kann.

In einer nicht beanspruchten Ausführungsform weist das Signalisierungselement eine erste Ausbuchtung auf, wobei die erste Ausbuchtung wulstartig ausgebildet ist, und/oder wobei das Signalisierungselement außenseitig der Ummantelung eine Vertiefung aufweist. Dadurch kann bei einer Reparatur des Kabelbaums das Kabelbündel besonders schnell in der Ummantelung aufgefunden werden kann.

In einer nicht beanspruchten Ausführungsform erstreckt sich die erste Ausbuchtung im Wesentlichen über eine gesamte Längserstreckung der Ummantelung.

In einer nicht beanspruchten Ausführungsform weist der Kabelbaum ein erstes Befestigungselement auf. Das erste Befestigungselement ist zumindest abschnittsweise in der Ummantelung eingebettet. Das erste Befestigungselement ist ausgebildet, wenigstens eines der Kabel des Kabelbündels in einer vordefinierten Position zu halten. Auf diese Weise kann eine Erwärmung des Kabelbaums definiert festgelegt werden, sodass auch eine lokale Überhitzung des Kabelbaums zuverlässig vermieden wird. Dadurch kann eine irreversible Beschädigung des Kabelbaums auf einfache Weise vermieden werden.

In einer nicht beanspruchten Ausführungsform weist der Kabelbaum ein zweites Befestigungselement auf. Das zweite Befestigungselement weist einen ersten Abschnitt, der in die Ummantelung eingebettet ist, auf. Das zweite Befestigungselement weist ferner einen zweiten Abschnitt auf, der ausgebildet ist, in ein Fahrzeugbauteil des Kraftfahrzeugs einzugreifen, um den Kabelbaum an dem Fahrzeugbauteil zu befestigen.

In einer nicht beanspruchten Ausführungsform weist die Ummantelung eine erste Schicht, eine zweite Schicht und vorzugsweise eine dritte Schicht auf, wobei das Kabelbündel in der ersten Schicht eingebettet ist, wobei die erste Schicht einen ersten Werkstoff und die zweite Schicht einen zweiten Werkstoff aufweist, wobei vorzugsweise der zweite Werkstoff eine unterschiedliche, vorzugsweise eine größere, Elastizität als der erste Werkstoff aufweist, wobei vorzugsweise die zweite Schicht rechteckförmig ausgebildet ist oder eine Rippenstruktur aufweist, wobei vorzugsweise die zweite Schicht auf einer der ersten Schicht zugewandten Seite eine mit einer vordefinierten Oberflächenstruktur versehene Oberfläche aufweist, wobei vorzugsweise die zweite Schicht auf einer der ersten Schicht abgewandten Seite eine plan ausgebildet ist, wobei vorzugsweise die dritte Schicht auf einer der ersten Schicht abgewandten Seite der zweiten Schicht angeordnet ist, wobei die dritte Schicht wenigstens einen Werkstoff aufweist, wobei der dritte Werkstoff einen Klebstoff und/oder eine dritte Elastizität aufweist, die unterschiedlich, vorzugsweise geringer ist, als die erste und/oder zweite Elastizität. Dadurch kann die zweite Schicht als Schutz für das Kabelbündel dienen, sodass eine mögliche Beschädigung des Kabelbündels, beispielsweise durch scharfe Kanten einer Karosserie des Fahrzeugs, vermieden wird.

In einer nicht beanspruchten Ausführungsform ist die erste Schicht in Richtung quer zu dem Kabelbündel schlanker ausgebildet ist als die zweite Schicht, wobei die erste Schicht ausgebildet ist eine Einbuchtung eines Fahrzeugbauteils einzugreifen, wobei vorzugsweise die erste Schicht einen trapezförmigen Querschnitt und die zweite Schicht eine im Wesentlichen rechteckförmigen Querschnitt aufweist.

In einer nicht beanspruchten Ausführungsform weist die Ummantelung eine zweite Ausbuchtung auf, wobei der Kabelbaum durch eine Durchführung in einem Fahrzeugbauteil durchführbar ist, wobei die zweite Ausbuchtung geneigt zu einer Längserstreckung des Kabelbündels sich erstreckt, wobei die zweite Ausbuchtung ausgebildet ist, zumindest abschnittsweise eine vorzugsweise fluiddichte Abtrennung zwischen zwei Räumen eine des Fahrzeugbauteils auszubilden, wobei die zweite Ausbuchtung eine Ausbuchtungskontur aufweist, wobei die zweite Ausbuchtung ausgebildet ist, die Ausbuchtungskontur an eine Durchführungskontur der Durchführung zu pressen, um eine im Wesentlichen fluiddichte Abtrennung zwischen den Räumen bereitzustellen.

In einer nicht beanspruchten Ausführungsform weist die Ummantelung eine zweite Ausbuchtung auf, wobei die zweite Ausbuchtung geneigt zu einer Längserstreckung des Kabelbündels sich erstreckt, wobei die zweite Ausbuchtung ausgebildet ist, zumindest abschnittsweise eine vorzugsweise fluiddichte Abtrennung zwischen zwei Räumen eine des Fahrzeugbauteils auszubilden, wobei die zweite Ausbuchtung eine Ausbuchtungskontur aufweist, wobei die zweite Ausbuchtung ausgebildet ist, die Ausbuchtungskontur an eine Einbuchtungskontur einer Einbuchtung eines Fahrzeugbauteils zu pressen um reibschlüssige Verbindung zwischen der Einbuchtung und der zweiten Aussparung bereitzustellen und den Kabelbaum in der Einbuchtung reibschlüssig zu befestigen. Dadurch kann der Kabelbaum besonders einfach in dem Kraftfahrzeug befestigt werden.

Erfindungsgemäss weist die Ummantelung einen ersten Ummantelungsabschnitt und einen zweiten Ummantelungsabschnitt auf. Der erste Ummantelungsabschnitt weist eine erste Quererstreckung zu einer ersten Längserstreckungsrichtung des ersten Ummantelungsabschnitts auf. Der zweite Ummantelungsabschnitt weist eine zweite Quererstreckung zu einer zweiten Längserstreckung des zweiten Ummantelungsabschnitts auf. Die erste Quererstreckung ist größer als die zweite Quererstreckung.

Die Aufgabe wird aber auch mittels einer Form zur Herstellung des oben beschriebenen Kabelbaums gemäß Patentanspruch 2 gelöst. Vorteilhafte Ausführungsformen sind in den abhängigen Ansprüchen angegeben.

Es wurde erkannt, dass eine verbesserte Form zur Herstellung eines Kabelbaums dadurch bereitgestellt werden kann, dass die Form eine Wandung und eine Öffnung aufweist. Die Wandung begrenzt zumindest seitlich einen Formraum. Der Formraum grenzt oberseitig an die Öffnung an. Die Wandung einen ersten Wandungsflächenabschnitt, einen zweiten Wandungsflächenabschnitt und einen Wandungsflächenübergangsabschnitt auf, wobei der erste Wandungsflächenabschnitt vorzugsweise tiefer als der zweite Wandungsflächenabschnitt angeordnet ist, wobei zwischen dem ersten Wandungsflächenabschnitt und dem zweiten Wandungsflächenabschnitt der Wandungsflächenübergangsabschnitt angeordnet ist, wobei der Wandungsflächenübergangsabschnitt geneigt gegenüber dem ersten Wandungsflächenabschnitt und dem zweiten Wandungsflächenabschnitt angeordnet ist, wobei die Neigung vorzugsweise einen Winkel aufweist, wobei der Winkel einen Wert aufweist, der kleiner als 45°, insbesondere kleiner als 30°, insbesondere kleiner als 20°, insbesondere kleiner als 15°, insbesondere kleiner als 10°, ist. Dadurch wird eine Rissbildung im Kabelbaum am Übergang zwischen dem ersten Wandungsummantelungsabschnitt und dem zweiten Wandungsummantelungsabschnitt vermieden.

Durch die nach oben geöffnete Form können die Kabel besonders leicht in der Herstellung des Kabelbaums verlegt werden, ohne dass diese um Stifte gezogen werden müssen. Dadurch kann der Kabelbaum besonders schnell hergestellt werden. Ferner können die Kabel auch automatisiert mittels eines Roboters verlegt werden, sodass die Fertigungskosten durch die Automatisierung weiter reduziert sind.

In einer nicht beanspruchten Ausgestaltung weist die Form eine Halteeinrichtung auf. Die Halteeinrichtung ist an der Wandung angeordnet und deckt zumindest abschnittsweise die Öffnung ab, wobei die Halteinrichtung plattenartig und/oder bürstenartig ausgebildet ist, wobei die Halteeinrichtung einen Werkstoff aufweist, der reversibel elastisch verformbar ist und die Halteeinrichtung wenigstens um 70°, vorzugsweise um 90° reversibel, vorzugsweise in den Formraum, biegbar ist. Dadurch wird vermieden, dass die in den Formraum eingelegten Kabel ungewollt herausrutschen können. Auch wird ein Aufschwimmen der Kabel im Formraum beim Schäumen der Ummantelung vermieden.

Besonders von Vorteil ist hierbei, wenn die Wandung einen Wandungsgrund aufweist, wobei die Halteeinrichtung zumindest abschnittsweise parallel zum Wandungsgrund angeordnet ist.

Erfindungsgemäss weist die Wandung einen ersten Wandungsabschnitt und einen zweiten Wandungsabschnitt auf. Der erste Wandungsabschnitt gegenüberliegend zum zweiten Wandungsabschnitt angeordnet ist, wobei die Halteeinrichtung ein erstes Halteelement und ein zweites Halteelement umfasst, wobei an dem ersten Wandungsabschnitt das erste Haltelement und an dem zweiten Wandungsabschnitt das zweite Halteelement angeordnet sind, wobei das erste Haltelement und das zweite Haltelement mit jeweils einem freien Ende über der Öffnung enden und den Formraum zumindest abschnittweise verschließen, wobei vorzugsweise der erste Wandungsabschnitt und/oder der zweite Wandungsabschnitt zumindest abschnittsweise wellenförmig profiliert ist.

In einer nicht beanspruchten Ausführungsform sind die freien Enden der Halteelemente beabstandet zueinander angeordnet, und/oder sind die Halteeinrichtungen überlappend über der Öffnung angeordnet.

In einer nicht beanspruchten Ausführungsform weist der erste Wandungsabschnitt einen ersten Wandungsbereich und einen zweiten Wandungsbereich auf, wobei der erste Wandungsbereich im Wesentlichen parallel zum zweiten Wandungsabschnitt angeordnet ist, wobei der zweite Wandungsbereich in eine vom zweiten Wandungsabschnitt abgewandte Richtung vom ersten Wandungsbereich versetzt verläuft, sodass der Formraum eine Verbreiterung aufweist, wobei der zweite Wandungsbereich korrespondierend zur ersten Ausbuchtungskontur und/oder zur zweiten Ausbuchtungskontur ausgebildet ist.

In einer nicht beanspruchten Ausführungsform ist in der Wandung eine Aussparung vorgesehen, wobei die Aussparung als Durchgangsöffnung ausgebildet ist und in einem Wandungsboden der Form angeordnet ist, wobei der Wandungsboden den Formraum unterseitig begrenzt, wobei die Aussparung ausgebildet ist, zumindest abschnittsweise das erste und/oder zweite Befestigungselement des Kabelbaums aufzunehmen, und/oder wobei ein Auswerfer zur Entnahme des Kabelbaums aus der Form ausgebildet ist, die Aussparung zu durchgreifen, wobei die Aussparung vorzugsweise korrespondierend zu dem Auswerfer ausgebildet ist. Dadurch kann der Kabelbaum besonders leicht und maschinell aus der Form entnommen werden.

In einer nicht beanspruchten Ausführungsform ist in der Wandung eine Aussparung vorgesehen, wobei die Aussparung ausgebildet ist, zumindest abschnittsweise das erste und/oder das zweite Befestigungselement des Kabelbaums aufzunehmen.

In einer weiteren Ausführungsform sind der erste Wandungsflächenabschnitt und der zweite Wandungsflächenabschnitt in zwei parallel zueinander angeordnete Ebenen angeordnet.

In einer nicht beanspruchten Ausführungsform ist die Halteeinrichtung abschnittsweise unterbrochen und/oder durchgängig der Wandung folgend ausgebildet.

In einer weiteren Ausführungsform weist die Halteeinrichtung als Werkstoff Silikon auf. Zusätzlich oder alternativ weist die Wandung wenigstens einen der folgenden Werkstoffe auf: Polytetraflourid, Polyoxymethylen.

Diese Werkstoffe weisen gegenüber dem Werkstoff der Ummantelung eine besonders geringe Oberflächenspannung auf, sodass eine zuverlässige Entformung des Kabelbaums nach dem Aushärten der Ummantelung sichergestellt ist. Insbesondere wird auch gewährleistet, durch die Verwendung der Werkstoffe für die Wandung, dass eine hohe Anzahl von Kabelbäumen mit der Form hergestellt werden können, ohne dass zusätzlich weitere Reinigungs- oder Wiederaufbereitungsschritte zur Herstellung der ursprünglichen Form notwendig sind.

In einer nicht beanspruchten Ausführungsform weist die Wandung eine dem Formraum zuwandte Wandfläche auf, wobei die Wandfläche zumindest abschnittsweise laserpoliert ist. Mittels des Laserpolierens werden möglicherweise in der Wandfläche vorhandene Riefen, die insbesondere dadurch entstehen, dass der Formraum in die Form gefräst wird, gemildert, sodass die Entformung und die Entnahme des Kabelbaums aus der Form zuverlässig gewährleistet ist.

In einer nicht beanspruchten Ausführungsform ist die Wandung zumindest abschnittsweise wellenförmig und/oder rippenförmig und/oder plan profiliert. Dadurch kann der Kabelbaum auf einfache Weise optimal an die geometrischen Randbedingungen in dem Fahrzeug angepasst werden.

In einer weiteren Ausführungsform ist an einem Längsende der Wandung ein Dichtelement angeordnet, um ein Austreten der Ummantelung aus dem Formraum zumindest teilweise zu unterbinden.

In einer nicht beanspruchten Ausführungsform weist die Form ein erstes Formteil und ein zweites Formteil auf. Das erste Formteil weist an einem Längsende ein erstes Eingriffselement auf. Das zweite Formteil weist an einem dem Längsende des ersten Formteils zugewandten Längsende des zweiten Formteils eine korrespondierend zum ersten Eingriffselement ausgebildete erste Aufnahme auf. Das erste Eingriffselement greift in die erste Aufnahme ein und verbindet formschlüssig das erste Formteil mit dem zweiten Formteil, wobei das Eingriffselement und die Aufnahme derart zueinander ausgebildet sind, dass ein Abziehen in Längsrichtung durch den Eingriff des Eingriffselements in die Aufnahme blockiert ist, wobei vorzugsweise das Eingriffselement und das erste Formteil einstückig und materialeinheitlich ausgebildet sind. Auf diese Weise kann die Form besonders leicht erweitert oder angepasst werden.

In einer weiteren Ausführungsform ist die Form ausgebildet, an einem Montagebrett eines Formsystems befestigt zu werden.

Die Aufgabe wird aber auch durch ein Formsystem gemäß Patentanspruch 8 gelöst.

Es wurde erkannt, dass ein verbessertes Formsystem dadurch bereitgestellt werden kann, dass das Formsystem eine Form und ein Montagebrett umfasst, wobei die Form wie oben beschrieben ausgebildet ist, wobei die Form auf einer einem Montagebrett zugewandten Seite ein weiteres Eingriffselement und das Montagebrett auf einer der Form zugewandten Seite wenigstens ein Rasterfeld mit mehreren weiteren Aufnahmen aufweist, oder wobei die Form auf einer dem Montagebrett zugewandten Seite eine weitere Aufnahme und das Montagebrett auf einer der Form zugewandten Seite ein Rasterfeld mit mehreren weiteren Eingriffselementen aufweist, wobei das weitere Eingriffselement und die weitere Aufnahme korrespondierend zueinander angeordnet sind, wobei das weitere Eingriffselement in eine der weiteren Aufnahme eingreift und das Montagebrett formschlüssig reversibel lösbar mit der Form verbindet, wobei die anderen weiteren Aufnahmen des Rasterfelds frei bleiben oder wobei eines der weitere Eingriffselemente in die weiteren Aufnahme eingreift und das Montagebrett formschlüssig reversibel lösbar mit der Form verbindet, wobei die anderen weiteren Eingriffselement des Rasterfelds frei bleiben, wobei vorzugsweise das weitere Eingriffselement einstückig und materialeinheitlich mit der Form oder mit dem Montagebrett ausgebildet ist.

Dadurch kann die Form besonders schnell auf dem Montagebrett montiert werden oder besonders schnell das Formsystem an einen unterschiedlich herzustellenden Kabelbaum angepasst werden.

Nachfolgend wird die Erfindung anhand von Figuren näher erläutert. Dabei zeigen:
Figur 1A einen Ausschnitt eines Querschnitts durch ein Fahrzeugbauteil eines Kraftfahrzeugs gemäß einer ersten Ausführungsform;
Figur 1B einen Ausschnitt auf eine Draufsicht auf das in Figur 1A gezeigte Fahrzeugbauteil;
Figur 2 eine Schnittansicht durch ein Fahrzeugbauteil gemäß einer zweiten Ausführungsform;
Figur 3A einen Ausschnitt eines Querschnitts durch ein Fahrzeugbauteil des Kraftfahrzeugs gemäß einer dritten Ausführungsform;
Figuren 3B bis 3D zeigen jeweils einen Ausschnitt eines Querschnitts jeweils einer Weiterbildung des in Figur 3A gezeigten Fahrzeugbauteils;
Figur 3E einen Längsschnitt durch eine Weiterbildung des in Figur 3A gezeigten Fahrzeugbauteils;
Figur 4A einen Ausschnitte eines Querschnitts durch ein Fahrzeugbauteil des Kraftfahrzeugs gemäß einer vierten Ausführungsform;
Figur 4B einen Ausschnitte eines Querschnitts durch eine Weiterbildung des in Figur 4A gezeigten Fahrzeugbauteils;
Figur 5 einen Längsschnitt durch einen Kabelbaum;
Figur 6 eine perspektivische Ansicht eines Kabelbaums in einer weiteren Ausführungsform;
Figur 7 eine perspektivische Ansicht eines Kabelbaums in einer weiteren Ausführungsform;
Figur 8 eine perspektivische Ansicht eines Kabelbaums in einer weiteren Ausführungsform;
Figur 9A eine perspektivische Ansicht eines Formsystems zur Herstellung wenigstens eines in den Figuren 1 bis 8 gezeigten Kabelbaums;
Figur 9B eine Draufsicht auf das in Figur 9A gezeigte Formsystem;
Figur 10 eine perspektivische Ansicht des ersten Formteils der in Figur 9A und Figur 9B gezeigten Form gemäß einer ersten Ausführungsform;
Figur 11A eine Schnittansicht durch die in Figur 10 gezeigte Form entlang einer in Figur 10 gezeigten Schnittebene A-A;
Figur 11B eine Schnittansicht einer Variante der in Figur 10 gezeigten Form entlang der in Figur 10 gezeigten Schnittebene A-A;
Figur 12 eine Schnittansicht durch ein erstes Formteil gemäß einer zweiten Ausführungsform entlang der in Figur 10 gezeigten Schnittebene A-A;
Figur 13 eine perspektivische Ansicht eines ersten Formteils gemäß einer dritten Ausführungsform;
Figur 14 einen Ausschnitt einer perspektivischen Ansicht der Form;
Figur 15 eine perspektivische Ansicht einer Weiterbildung der in den Figuren 9A bis 14 gezeigten Form;
Figur 16 eine perspektivische Ansicht einer Weiterbildung der in den Figuren 9A bis 15 gezeigten Form;
Figur 17 einen Ausschnitt einer perspektivischen Ansicht einer Weiterbildung der in Figur 16 gezeigten Form;
Figur 18 eine perspektivische Ansicht des ersten Formteils gemäß einer vierten Ausführungsform;
Figur 19 eine perspektivische Ansicht der Form mit dem in Figur 18 gezeigten Formteil;
Figur 20 eine perspektivische Darstellung der Wandung in einer Weiterbildung;
Figur 21 eine perspektivische Darstellung der Wandung in einer Variante zu der in Figur 20 gezeigten Ausgestaltung;
Figur 22 eine perspektivische Ansicht der Form in einer weiteren Ausführungsform;
Figur 23 einen Längsschnitt durch die Form in einer weiteren Ausführungsform;
Figur 24 eine perspektivische Ansicht einer Form in einer weiteren Ausführungsform;
Figur 25 eine perspektivische Ansicht einer Form in einer weiteren Ausführungsform;
Figur 26 eine perspektivische Ansicht einer Form in einer weiteren Ausführungsform;
Figur 27 eine perspektivische Ansicht des ersten Befestigungselements gemäß einer ersten Ausführungsform;
Figur 28 eine perspektivische Ansicht eines ersten Befestigungselements gemäß einer zweiten Ausführungsform;
Figur 29 eine perspektivische Darstellung eines ersten Befestigungselements gemäß einer dritten Ausführungsform;
Figur 30 eine perspektivische Ansicht eines ersten Befestigungselements gemäß einer vierten Ausführungsform;
Figur 31 eine perspektivische Darstellung eines zweiten Befestigungselements;
Figur 32 eine perspektivische Ansicht des zweiten Befestigungselements gemäß einer zweiten Ausführungsform;
Figur 33 ein Ablaufdiagramm eines Verfahrens zur Herstellung des Kabelbaums;
Figur 34 eine Draufsicht auf das Formsystem während eines dritten Verfahrensschritts; und
Figur 35 eine Schnittansicht entlang einer in Figur 34 gezeigten Schnittebene D-D.

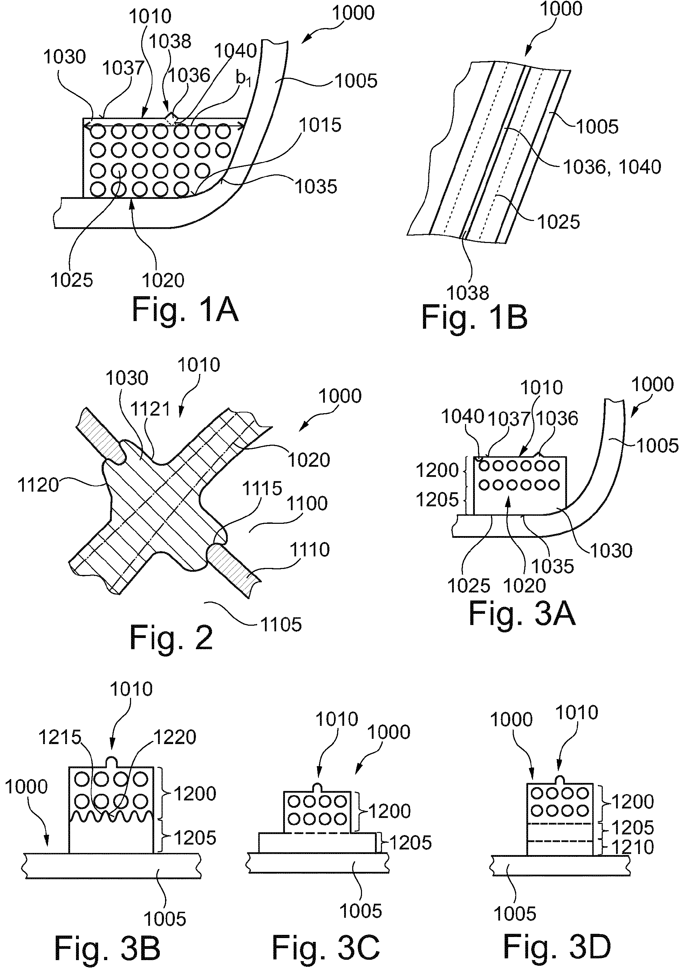

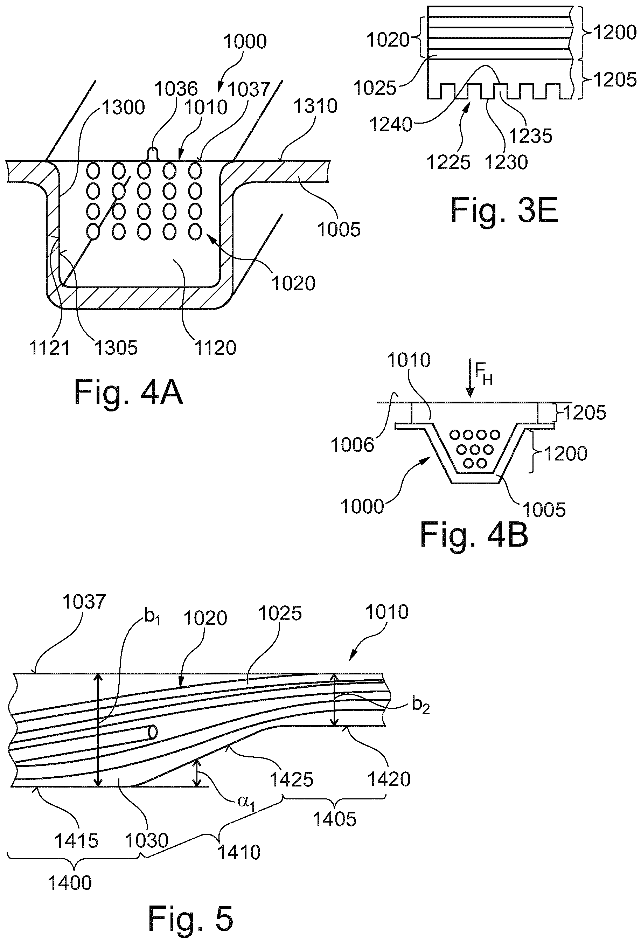

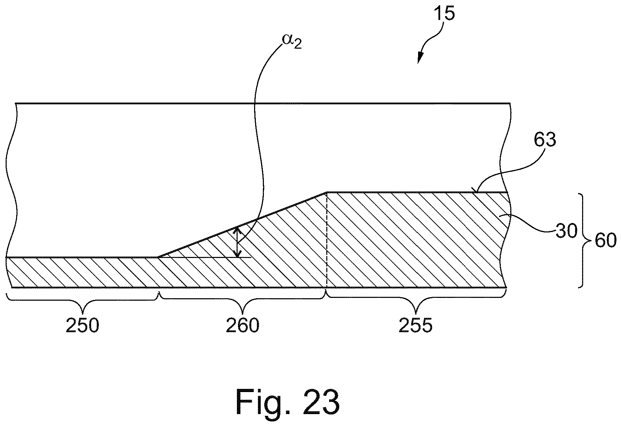

Es wird darauf hingewiesen, dass die Figuren 1A bis 4B, 6 bis 22, 24 bis 35 zur Erläuterung des allgemeinen Verständnis dienen. Figur 5 zeigt einen erfindungsgemäßen Kabelbaum 1010 und Figur 23 eine erfindungsgemäße Form 15.

Figur 1A zeigt einen Ausschnitt eines Querschnitts durch ein Fahrzeugbauteil 1000 eines Kraftfahrzeugs gemäß einer ersten Ausführungsform. Das Fahrzeugbauteil 1000 weist eine Struktur 1005 und einen Kabelbaum 1010 auf. Die Struktur 1005 beispielsweise eine Karosserie, ein Tiefziehteil, ein Dachhimmel, ein Türpanel, ein Zwischenpanel, ein Schallschutzschott oder ein Cockpit sein. Die Struktur 1005 kann beispielsweise aus Blech oder Kunststoffhergestellt sein. Die Struktur 1005 kann aber auch eine Kunststoffstruktur, ein Teppich oder ähnliches sein. Die Struktur 1005 weist eine Anlagefläche 1015 auf. Die Anlagefläche 1015 ist dem Kabelbaum 1010 zugewandt.

Der Kabelbaum 1010 weist ein Kabelbündel 1020 mit mehreren Kabeln 1025 auf. Die Kabel 1025 dienen dazu, elektrische Signale oder einen elektrischen Strom zwischen zwei Punkten zu übertragen. Die Kabel 1025 sind etwa in gleicher Richtung verlaufend zueinander angeordnet. Dabei kann am jeweiligen Ende des Kabelbaums 1010 ein Verbindungssystem zur elektrischen Verbindung des Kabelbaums 1010 mit einem weiteren elektrischen Gerät vorgesehen sein. Die Kabel 1025 des Kabelbündels 1020 sind in einer Ummantelung 1030 des Kabelbaums 1010 eingebettet. Die Ummantelung 1030 weist außenseitig eine Seitenfläche 1035 mit einer Ummantelungskontur auf.

Die Ummantelung 1030 weist vorzugsweise wenigstens einen der folgenden Werkstoffe auf: Polyurethan, Silikon, Schaum, geschlossenporigen Schaum, offenporigen Schaum, Silikonschaum, Polyurethanschaum. Der Kabelbaum 1010 liegt mit der Seitenfläche 1035 an der Anlagefläche 1015 an. Dabei kann zusätzlich zwischen der Anlagefläche 1015 und der Seitenfläche 1035 eine Klebschicht vorgesehen sein, um den Kabelbaum 1010 stoffschlüssig mit der Struktur 1005 zu verbinden.

Der Querschnitt der Ummantelung 1030 ist dabei frei wählbar und vorzugsweise korrespondierend zu der geometrischen Ausgestaltung der Anlagefläche 1015 zu wählen. Dabei ist von besonderem Vorteil, wenn die Anlagekontur und die Ummantelungskontur abschnittsweise identisch sind, sodass ein besonders gutes flächiges Anliegen des Kabelbaums 1010 an der Struktur 1005 sichergestellt ist.

Besonders von Vorteil ist, wenn die Ummantelung 1030 ein Signalisierungselement 1038 umfasst. Das Signalisierungselement 1038 umfasst eine erste Ausbuchtung 1036, vorteilhafterweise an einer Oberseite 1037 des Kabelbaums 1010, aufweist. Die erste Ausbuchtung 1036 ragt über die Oberseite 1037 hervor. Die erste Ausbuchtung 1036 ist vorzugsweise wulstartig ausgebildet und erstreckt sich vorzugsweise zumindest abschnittsweise parallel zum Kabelbündel 1020. Das Signalisierungselement 1038 kann mittig zu einer maximalen ersten Quererstreckung b₁ angeordnet sein. Dadurch kann auf einfache Weise der Verlauf der Kabel 1025 des Kabelbündels 1020 signalisiert werden. Ferner kann mit dem Signalisierungselement 1038 eine vordefinierte Seite zum Einlegen des Kabelbaums 1010 in die Struktur 1005 signalisiert werden, sodass der Kabelbaum 1010 besonders schnell in der Montage des Kraftfahrzeugs montiert werden kann. Zusätzlich oder alternativ ist auch denkbar, dass das Signalisierungselement 1038 eine Vertiefung 1040 in der Oberseite 1037 umfasst (strichliert in Figur 1A dargestellt). Die Vertiefung 1040 kann beispielsweise zur Signalisierung eines bestimmten Typs von Kabelbaum 1010 dienen.

Figur 1B einen Ausschnitt auf eine Draufsicht auf das in Figur 1A gezeigte Fahrzeugbauteil 1000.

Das Signalisierungselement 1038 erstreckt sich im Wesentlichen über die gesamte Längserstreckung des Kabelbaums 1010. Dadurch kann besonders einfach eine Einlegeposition des Kabelbündels 1020 in der Ummantelung 1030 ermittelt werden. Dies ist insbesondere dann von Vorteil, wenn die Ummantelung 1030 besonders dick ausgebildet ist und das Kabelbündel 1025 in der Ummantelung weder ertastet noch optisch erkennbar ist.

Figur 2 zeigt eine Schnittansicht durch ein Fahrzeugbauteil 1000 gemäß einer zweiten Ausführungsform. Das Fahrzeugbauteil 1000 ist im Wesentlichen identisch zu dem in Figur 1A gezeigten Fahrzeugbauteil 1000 ausgebildet. Die Struktur 1005weist einen ersten Raum 1100 und einen zweiten Raum 1105 auf. Zwischen dem ersten Raum 1100 und dem zweiten Raum 1105 ist eine Trennwand 1110 vorgesehen. Die Trennwand 1110 weist eine Öffnung 1115 auf. Durch die Öffnung 1115 ist der Kabelbaum 1010 geführt.

Der Kabelbaum 1010 ist im Wesentlichen identisch zu dem in Figur 1A und Figur 1B erläuterten Kabelbaum 1010 ausgebildet. Zusätzlich weist die Ummantelung 1030 des Kabelbaums 1010 eine zweite Ausbuchtung 1120 auf. Die zweite Ausbuchtung 1120 erstreckt sich quer zu einer Längserstreckung des Kabelbündels 1020. Die Ummantelung 1030 weist vorteilhafterweise zumindest im Bereich der zweiten Ausbuchtung 1120 einen weichelastischen Werkstoff auf. Die zweite Ausbuchtung 1120 weist eine Ausbuchtungskontur 1121 auf. Die zweite Ausbuchtung 1120 ist in der Öffnung 1115 angeordnet und verfüllt die Öffnung 1115. Vorzugsweise ist die zweite Ausbuchtung 1120 in die Öffnung 1115 eingedrückt/verpresst. Dadurch drückt die zweite Ausbuchtung 1120 die Ausbuchtungskontur 1121 umlaufend an eine Öffnungskontur 1122 der Öffnung 1115 und dichtet den ersten Raum 1100 vom zweiten Raum fluidisch ab. Ferner wird dadurch wird eine Schallübertragung zwischen dem ersten Raum 1100 und dem zweiten Raum 1105 durch die zweite Ausbuchtung 1120 vermieden. Dabei ist von besonderem Vorteil, wenn die zweite Ausbuchtung 1120 umlaufend um das Kabelbündel 1020 herum angeordnet ist. Dabei kann besonders vorteilhafterweise im Querschnitt die zweite Ausbuchtung 1120 dreiecksförmig ausgebildet sein. Dadurch kann auf den Einsatz einer Tülle in der Öffnung 1115 verzichtet werden.

Figur 3A zeigt einen Ausschnitt eines Querschnitts durch ein Fahrzeugbauteil 1000 des Kraftfahrzeugs gemäß einer dritten Ausführungsform. Das Fahrzeugbauteil ist ähnlich zu dem in Figuren 1 und 2 gezeigten Fahrzeugbauteil 1000 ausgebildet. Abweichend dazu weist der Kabelbaum 1010 eine erste Schicht 1200 und eine zweite Schicht 1205 auf. Die zweite Schicht 1205 ist unterseitig zur ersten Schicht 1200 und zwischen der ersten Schicht 1200 und der Struktur 1005 angeordnet. In der ersten Schicht 1200 ist das Kabelbündel 1020 eingebettet. Dabei grenzt erste Ausbuchtung 1036 an die erste Schicht 1200 an. Die erste Schicht 1200 weist vorzugsweise einen ersten Werkstoff auf und die zweite Schicht 1205 weist vorzugsweise einen zweiten Werkstoff auf. Die erste Schicht 1200 und die zweite Schicht 1205 können auch einen identischen Werkstoff aufweisen. Der zweite Werkstoff kann dabei eine unterschiedliche Elastizität zum ersten Werkstoff aufweisen. So ist von Vorteil, wenn die Elastizität des zweiten Werkstoffs größer ist als die Elastizität des ersten Werkstoffs, dass ein Klappern des Kabelbündels 1020 durch die besonders elastischen Eigenschaften der zweiten Schicht 1205 an der Struktur 1005 vermieden werden kann.

Ferner ist von Vorteil, wenn die Elastizität des zweiten Werkstoffs der zweiten Schicht 1205 geringer ist als die Elastizität des ersten Werkstoffs, da dadurch die zweite Schicht 1205 eine Art Platte ausbildet, die das Kabelbündel 1020 wirksam vor möglichen Beschädigungen schützt.

In der Ausführungsform ist die zweite Schicht 1205 im Querschnitt rechteckförmig. Auch sind andere Ausgestaltungen der zweiten Schicht 1205 denkbar. So kann beispielsweise die zweite Schicht 1205 auch halbkreisförmig, elliptisch, U-förmig, C-förmig, zylindrisch oder andersartig ausgebildet sein. Auch ist denkbar, dass die zweite Schicht 1205 anstatt der in Figur 3 gezeigten planen Ausgestaltung in Längsrichtung des Kabelbaums 1010 eine Rippenstruktur aufweist. Dadurch kann der Kabelbaum 1010 besonders gut um einen Radius geführt werden und gleichzeitig ein hoher Schutz durch die zweite Schicht 1205 für das Kabelbündel 1020 sichergestellt werden.

Figur 3B zeigt einen Ausschnitt eines Querschnitts einer Weiterbildung des in Figur 3A gezeigten Fahrzeugbauteils 1000. Der Kabelbaum 1010 ist im Wesentlichen identisch zu dem in Figur 3 gezeigtem Kabelbaum 1010 ausgebildet. Abweichend dazu weist die zweite Schicht 1200 eine definierte Oberflächenstruktur 1215 an einer zu der ersten Schicht 1200 zugewandten Oberfläche 1220 auf. Die Oberflächenstruktur 1215 ist beispielsweise wellenförmig ausgebildet. Dadurch wird die Größe der Oberfläche 1220 der zweiten Schicht 1205 vergrößert und ein Anhaften der ersten Schicht 1205 gegenüber der in Figur 3A gezeigten Ausgestaltung an der zweiten Schicht 1200 verbessert.

Figur 3C zeigt einen Ausschnitt eines Querschnitts einer Weiterbildung des in Figur 3A gezeigten Fahrzeugbauteils 1000. Abweichend dazu ist die erste Schicht 1200 in Querrichtung zu dem Kabelbündel 1020 schlanker ausgebildet als die zweite Schicht 1205.

Figur 3D zeigt einen Ausschnitt eines Querschnitts einer Weiterbildung des in Figur 3 gezeigten Fahrzeugbauteils 1000. Zusätzlich weist die Ummantelung 1030 eine dritte Schicht 1210 auf. Die dritte Schicht 1210 ist auf einer der ersten Schicht 1200 abgewandten Seite der zweiten Schicht 1205 angeordnet und mit dieser verbunden. Die dritte Schicht 1210 weist einen dritten Werkstoff mit einer dritten Elastizität auf. Die dritte Elastizität ist vorzugweise geringer als die erste Elastizität und/oder die zweite Elastizität. Vorzugsweise ist die dritte Schicht 1210 als Prallplatte oder als Klebschicht ausgebildet. Bei der Ausbildung als Prallplatte ist von Vorteil, dass durch die dritte Schicht 1210 eine Beschädigung des Kabelbündels 1020 vermieden werden kann und gleichzeitig Schwingungen durch die zweite Schicht 1205 besonders gut gedämpft werden können. In der Ausführungsform sind die Schichten 1200, 1205, 1210 beispielhaft rechteckförmig mit identischer Breite in einem Schichtstapel angeordnet. Die Schichten 1200, 1205, 1210 können auch unterschiedliche Breiten oder Ausgestaltungen aufweisen.

Figur 3E zeigt einen Längsschnitt durch eine Weiterbildung des in Figur 3A gezeigten Fahrzeugbauteils 1000. In der zweiten Schicht 1200 ist eine Rippenstruktur 1225 vorgesehen. Die Rippenstruktur 1225 weist Rippen 1230 und zwischen in Längsrichtung den Rippen 1230 angeordnet Rippenausnehmungen 1235 auf, die in Längsrichtung die Rippen 1230 begrenzen. Die Rippenausnehmungen 1235 weisen jeweils einen Ausnehmungsgrund 1240 auf, der beabstandet durch zu den Kabel 1025 des Kabelbündels 1020 angeordnet ist.

Figur 4A zeigt einen Ausschnitt eines Querschnitts durch ein Fahrzeugbauteil 1000 des Kraftfahrzeugs gemäß einer vierten Ausführungsform. Das Fahrzeugbauteil 1000 ist im Wesentlichen identisch zu dem in Figuren 1A bis 3E gezeigten Fahrzeugbauteil 1000 ausgebildet. Die Struktur 1005 weist eine nutartige Einbuchtung 1300 mit einer Einbuchtungskontur 1301 auf. Die Einbuchtung 1300 ist beispielhaft rechteckförmig ausgebildet. Die Einbuchtung 1300 kann beispielsweise während eines Pressvorgangs in die Struktur 1005 eingebracht werden.

Der Kabelbaum 1010 ist im Wesentlichen identisch zu der in den Figur 3A gezeigten Ausführungsform ausgebildet. Der Kabelbaum 1010 ist in der Einbuchtung 1300 angeordnet. Dabei weist die Ummantelung 1030 die zweite Ausbuchtung 1120 auf. Die zweite Ausbuchtung 1120 ist vorzugsweise umfangsseitig, das Kabelbündel 1020 auf vorzugsweise drei Seiten umgreifend und vorzugsweise schichtartig ausgebildet. Die zweite Ausbuchtung 1120 weist eine Ausbuchtungskontur 1121 auf. Der Werkstoff der zweiten Ausbuchtung 1120 ist vorzugsweise elastisch und einstückig und materialeinheitlich mit dem Werkstoff der Ummantelung 1030. In nicht montiertem Zustand ist dabei vorzugsweise die Ausbuchtungskontur 1121 der zweiten Ausbuchtung 1120 größer als die Einbuchtungskontur der Einbuchtung 1300.

Wird der Kabelbaum 1010 montiert, so wird die zweite Ausbuchtung 1120 und deren Werkstoff zusammengedrückt, sodass die zweite Ausbuchtung 1120 ihre Ausbuchtungskontur 1121 an die Einbuchtungskontur der Einbuchtung 1300 andrückt, sodass der Kabelbaum 1010 über die zweite Ausbuchtung 1120 reibschlüssig mit der Einbuchtung 1300 des Fahrzeugbauteils 1000 verbunden ist. Dadurch kann der Kabelbaum 1010 besonders platzsparend in der Struktur 1005 des Fahrzeugbauteils 1000 untergebracht werden.

Insbesondere ist hier von Vorteil, dass die Struktur 1005 angrenzend an die Einbuchtung 1300 eine Oberfläche 1310 aufweist, wobei die Oberseite 1037 des Kabelbaums 1010 im Wesentlichen übergangslos / stufenlos zu der Oberfläche 1310 ausgebildet sind. Vorzugsweise liegen die Oberseite 1037 und die Oberfläche der Struktur 1005 in einer gemeinsamen Ebene. Dabei kann bei dem Kabelbaum 1010 auf die zweite Ausbuchtung 1120 verzichtet werden, wobei in dieser Ausgestaltung der Kabelbaum 1010 die Einbuchtung 1300 im Wesentlichen vollständig verfüllt. Auch kann die zweite Ausbuchtung 1120 in Längsrichtung nur abschnittweise vorgesehen sein, in den übrigen Bereichen (ohne zweite Ausbuchtung 1120) ist hierbei beispielsweise die Ummantelung 1030 beabstandet zu der Einbuchtungskontur 1305 angeordnet.

Figur 4B zeigt einen Querschnitt durch eine Weiterbildung des in Figur 4A gezeigten Fahrzeugbauteils 1000.

Die in Figur 4B gezeigte Ausgestaltung ist im Wesentlichen eine Kombination der in Figur 3C gezeigten Ausgestaltung des Kabelbaums 1010 mit der in Figur 4A gezeigten Ausgestaltung des Fahrzeugbauteils 1000. Abweichend dazu weist das Fahrzeugbauteil 1000 zusätzlich zur Struktur 1005 eine Haltestruktur 1006 auf, die oberseitig beabstandet zur Einbuchtung 1300 angeordnet ist. In die Einbuchtung 1300 greift nur die erste Schicht 1200 ein, während hingegen die zweite Schicht 1205 außerhalb der Einbuchtung 1300 zwischen der Haltestruktur 1006 und der Struktur 1005 angeordnet ist. Vorzugsweise drückt die Haltestruktur 1006 mit einer Haltekraft F_{H} gegen die zweite Schicht 1205 und sichert so den Kabelbaum 1010 an der Struktur 1005. Die Haltestruktur 1006 kann an der Struktur 1005 befestigt sein. Auch kann die Haltestruktur 1006 eine andere Fahrzeugbaugruppe zu der Struktur sein.

Figur 5 zeigt einen Längsschnitt durch einen Kabelbaum 1010. Die Ummantelung 1030 des Kabelbaums 1010 weist einen ersten Ummantelungsabschnitt 1400, einen zweiten Ummantelungsabschnitt 1405 und einen Übergangsabschnitt 1410 auf. Der Übergangsabschnitt 1410 ist in Längsrichtung des Kabelbaums 1010 zwischen dem ersten Ummantelungsabschnitt 1400 und dem zweiten Ummantelungsabschnitt 1405 angeordnet. Der erste Ummantelungsabschnitt 1400 weist eine erste Seitenfläche 1415 und der zweite Ummantelungsabschnitt 1405 eine zweite Seitenfläche 1420 auf. Die Seitenflächen 1415, 1420 sind vorzugweise parallel in zwei unterschiedlich zueinander versetzt angeordneten Ebenen angeordnet. Dabei sind die Seitenflächen 1415, 1420 beispielhaft plan ausgebildet. Auch eine andere Ausgestaltung der Seitenflächen 1415, 1420 ist denkbar. Der Übergangsabschnitt 1410 weist eine Übergangsfläche 1425 auf. Die Seitenflächen 1415, 1420 und die Übergangsfläche 1425 können unterseitig am Kabelbaum 1010, seitlich am Kabelbaum 1010 oder oberseitig am Kabelbaum 1010 angeordnet sein. Die Übergangsfläche 1425 ist geneigt gegenüber der ersten Seitenfläche 1415 und der zweiten Seitenfläche 1420 angeordnet. Die Neigung weist einen Winkel α₁ auf, wobei der Winkel α₁ einen Wert aufweist, der kleiner als 45°, insbesondere kleiner als 30°, insbesondere kleiner als 20°, insbesondere kleiner als 15°, insbesondere kleiner als 10° ist. Dadurch wird eine Rissbildung in der Ummantelung 1030 beim Übergang zwischen dem ersten Ummantelungsabschnitt 1400 und dem zweiten Ummantelungsabschnitt 1405 vermieden. Es ist auch denkbar, dass die Übergangsfläche 1425 anstatt der in Figur 5 gezeigten planen Ausgestaltung gekrümmt ausgebildet ist. Hierbei ist insbesondere eine konvexe oder eine konkave Krümmung denkbar.

Durch die versetzten Seitenflächen 1415, 1420 weist der erste Ummantelungsabschnitt 1400 die erste Quererstreckung b₁ zu einer ersten Längserstreckungsrichtung des ersten Ummantelungsabschnitts 1400 und der zweite Ummantelungsabschnitt 1405 eine zweite Quererstreckung b₂ zu einer zweiten Längserstreckungsrichtung des zweiten Ummantelungsabschnitts 1405 auf. Die erste Quererstreckung b₁ ist dabei größer als die zweite Quererstreckung b₂.

Beispielhaft ist in Figur 5 die erste Längserstreckungsrichtung identisch zur zweiten Längserstreckungsrichtung. Die erste Längserstreckungsrichtung kann auch unterschiedlich zur der zweiten Längserstreckungsrichtung sein und beispielsweise der Übergangsabschnitt 1410 gekrümmt ausgebildet sein. Diese Ausgestaltung des Kabelbaums 1010 hat den Vorteil, dass der Kabelbaum 1010 in seiner Breite flexibel an den an der Struktur 1005 zur Verfügung stehenden Bauraum angepasst werden kann.

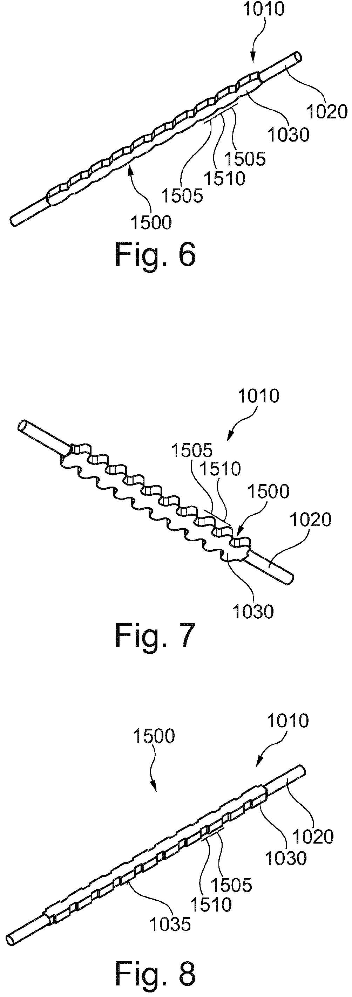

Figur 6 zeigt eine perspektivische Ansicht eines Kabelbaums 1010 in einer weiteren Ausführungsform.

Der Kabelbaum 1010 ist ähnlich zu dem in den Figuren 1 bis 5 gezeigten Kabelbaum 1010 ausgebildet. Abweichend dazu ist die Seitenfläche 1035 mit einem beispielhaften wellenartigen Profil 1500 ausgebildet. Das Profil 1500 weist einen ersten Profilabschnitt 1505 und einen zweiten Profilabschnitt 1510 auf. Der erste Profilabschnitt 1505 ist beispielhaft in Längsrichtung breiter ausgebildet als der zweite Profilabschnitt 1510. Vorzugsweise ist der erste Profilabschnitt 1505 konkav ausgebildet und der zweite Profilabschnitt konvex. Der erste und der zweite Profilabschnitt 1505, 1510 wechseln sich in Längsrichtung ab.

Figur 7 zeigt eine perspektivische Ansicht eines Kabelbaums 1010 in einer weiteren Ausführungsform;
Der Kabelbaum 1010 ist im Wesentlichen identisch zu dem in Figur 6 gezeigten Kabelbaum 1010 ausgebildet. Abweichend dazu sind der erste Profilabschnitt 1505 und der zweite Profilabschnitt 1510 identisch breit ausgebildet.

Figur 8 zeigt eine perspektivische Ansicht eines Kabelbaums 1010 in einer weiteren Ausführungsform;
Der Kabelbaum 1010 ist im Wesentlichen identisch zu dem in Figur 6 gezeigten Kabelbaum 1010 ausgebildet. Abweichend dazu ist das Profil 1500 im Wesentlichen rechteckförmig, wobei der erste Profilabschnitt des in Figur 6 gezeigten Kabelbaums 1010 im Wesentlichen plan ausgebildet ist und der zweite Profilabschnitt 1510 als Einbuchtung in der Seitenfläche 1035 ausgebildet ist.

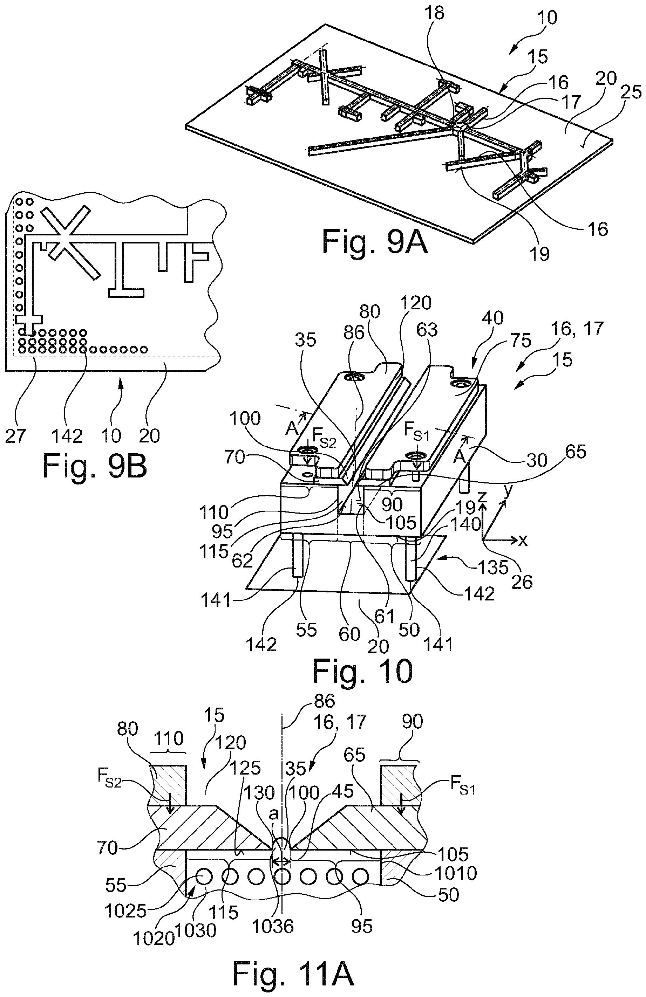

Figur 9A zeigt eine perspektivische Ansicht eines Formsystems 10 zur Herstellung wenigstens eines in den Figuren 1 bis 8 gezeigten Kabelbaums 1010.

Das Formsystem 10 weist vorzugsweise eine Form 15 und ein Montagebrett 20 auf. Das Montagebrett 20 ist beispielhaft plan. Die Form 15 kann ein erstes Formteil 16 und wenigstens ein zweites Formteil 17 aufweisen, die jeweils an einem Längsende 18 aneinanderstoßen und mit einer Unterseite 19 auf einer Oberseite 25 des Montagebretts 20, vorzugsweise in einer gemeinsamen Ebene, angeordnet sind.

Figur 9B zeigt einen Ausschnitt einer Draufsicht auf das in Figur 9A gezeigte Formsystem 10.

Das Montagebrett 20 weist an der Oberseite 25 beispielhaft ein Rasterfeld 27 mit mehreren identisch zueinander ausgebildeten ersten Aufnahmen 142. Die erste Aufnahmen 142 sind in dem Rasterfeld 27 in einem regelmäßigen Muster angeordnet. Aus Übersichtlichkeitsgründen wurden nur einige der ersten Aufnahmen 142 in Figur 9B dargestellt.

Figur 10 zeigt eine perspektivische Ansicht des ersten Formteils 16 der in Figur 9A und Figur 9B gezeigten Form 15 gemäß einer ersten Ausführungsform.

Zur erleichterten Erläuterung der Form 15 wird im Folgenden auf ein Koordinatensystem 26 Bezug genommen. Das Koordinatensystem 26 ist vorzugsweise als Rechtssystem ausgebildet und weist eine x-Richtung (Quererstreckungsrichtung), eine y-Richtung (Längsrichtung) und eine z-Richtung (Höhe) auf.

Die Form 15 weist eine Wandung 30, eine Öffnung 35 und eine Halteeinrichtung 40 auf. Die Wandung 30 begrenzt einen Formraum 45. In dem Formraum 45 werden das Kabelbündel 1020 und die Ummantelung 1030 in der Herstellung des Kabelbaums 1010 über die Öffnung 35 eingebracht. Die Öffnung 35 ist oberseitig angeordnet und grenzt an den Formraum 45 an. In der Ausführungsform ist beispielhaft der Formraum 45 mit einem rechteckförmigen Querschnitt ausgebildet. Der Formraum 45 kann auch andersartig ausgebildet sein und einen anderen Querschnitt aufweisen. So ist beispielsweise auch denkbar, dass der Formraum 45 (abschnittsweise) polygonförmig, dreiecksförmig, verrundet, kreisförmig und/oder elliptisch ausgebildet ist.

Die Wandung 30 weist einen ersten Wandungsabschnitt 50, einen zweiten Wandungsabschnitt 55 und einen Wandungsboden 60 auf. Zwischen dem ersten Wandungsabschnitt 50 und dem zweiten Wandungsabschnitt 55 ist der Wandungsboden 60 angeordnet. Der erste Wandungsabschnitt 50 und der zweite Wandungsabschnitt 55 begrenzen seitlich den Formraum 45. Der Wandungsboden 60 begrenzt unterseitig den Formraum 45. Vorzugsweise oberhalb des Wandungsbodens 60 ist die Öffnung 35 angeordnet.

Der erste Wandungsabschnitt 50 weist eine dem Formraum 45 zugewandte erste Wandungsfläche 61, der zweite Wandungsabschnitt 55 eine dem Formraum 45 zugewandte zweite Wandungsfläche 62 und der Wandungsboden 60 einen dem Formraum 45 zugewandten Wandungsgrund 63 auf. In der Ausführungsform sind beispielhaft die erste und zweite Wandungsfläche 61, 62 parallel geführt. Der Wandungsgrund 63 ist senkrecht zur ersten Wandungsfläche 61 und zur zweiten Wandungsfläche 62 angeordnet. Der Wandungsgrund 63 und/oder die Wandungsfläche 61, 62 können auch anders angeordnet sein. So kann die erste Wandungsfläche 61 schräg zur zweiten Wandungsfläche 62 angeordnet sein. Auch wäre denkbar, dass die erste Wandungsfläche 61 und die zweite Wandungsfläche 62 direkt aneinander angrenzen und auf den Wandungsboden 60 verzichtet wird, sodass beispielsweise der Formraum 45 einen dreiecksförmigen Querschnitt aufweist.

Dabei ist von besonderem Vorteil, wenn wenigstens eine der Wandungsflächen 61, 62 und/oder der Wandungsgrund 63 zumindest abschnittsweise laserpoliert ist. Dadurch kann eine besonders hohe Oberflächengüte sichergestellt werden. Ferner werden Riefen und/oder Rillen, die beispielsweise dadurch entstehen, indem der Formraum 45 mittels eines Spanverfahrens in einen Grundkörper zur Herstellung der Form 15 eingebracht wird, durch das Laserpolieren zumindest teilweise aufgehoben werden. Dadurch wird eine besonders langzeitstabile Form 15 sichergestellt, mit der zahlreiche Kabelbäume 1010 ohne zusätzliche Vorbereitung der Form 15 hergestellt werden können.

Im Gegensatz zur planen Ausgestaltung der Wandungsfläche 61, 62 und/oder des Wandungsgrunds 63 können auch die Wandungsfläche 61, 62 und/oder der Wandungsgrund 63 zumindest abschnittsweise wellenförmig und/oder rippenförmig profiliert sein.

Die Halteeinrichtung 40 umfasst ein erstes Halteelement 65, ein zweites Halteelement 70, ein erstes Anpresselement 75, ein zweites Anpresselement 80 und ein erstes Befestigungsmittel 85. Das erste Halteelement 65 und das zweite Halteelement 70 sind beispielhaft symmetrisch zu einer Symmetrieebene 86, die vorzugsweise mittig durch den Formraum 45 verläuft, ausgebildet. Die Symmetrieebene 86 ist als YZ-Ebene vorzugsweise ausgebildet. Auch können das erste Halteelement 65 und das zweite Halteelement 70 unterschiedlich zueinander ausgebildet sein.

Die Form 15 ist mittels eines zweiten Befestigungsmittels 135, das in der Ausführungsform beispielhaft wenigstens einen als erstes Eingriffselement beispielhaft ausgebildeten Stift 140 aufweist, mit dem Montagebrett 20 formschlüssig verbunden. Der Stift 140 ist dabei mit der Wandung 30 verbunden und greift mit einem freien Längsende 141 in die korrespondierend zum Stift 140 ausgebildete erste Aufnahme 142 des Rasterfelds 27 in das Montagebrett 20 ein. Um eine besonders einfache Montage der Form 15 auf dem Montagebrett 20 sind hierzu vorzugsweise mehrere korrespondierend zu den ersten Aufnahmen 142 und identisch zueinander ausgebildete Stifte 140 vorgesehen, die mit der Wandung 30 verbunden sind. Die Stifte 140 greifen je nach Ausrichtung der Form 15 in jeweils eine erste Aufnahme 142 des Rasterfelds 27 ein, während hingegen die anderen ersten Aufnahmen 142 des Rasterfelds 27 frei bleiben. Dabei kann der Eingriff zusätzlich kraftschlüssig gesichert werden, um ein ungewolltes Abfallen der Form 15 vom Montagebrett 20, beispielsweise wenn das Formsystem 10 gekippt werden sollte, zu verhindern. Dies kann beispielsweise dadurch erzielt werden, dass der Stift 140 und die Aufnahme 142 als Übergangspassungssystem oder als Presspassungssystem ausgebildet sind.

Auch kann das zweite Befestigungsmittel 135 andersartig ausgebildet sein. Insbesondere ist hierbei auch denkbar, dass das zweite Befestigungsmittel 135 als Schraubsystem ausgebildet ist.

Die erste Aufnahme kann auch an der Unterseite 19 des Formteils 16, 17 angeordnet sein. An der Oberseite des Montagebretts 20 weist das Montagebrett 20 vorzugsweise eine Vielzahl als erste Eingriffselemente ausgebildete Stifte 140 auf.

Alternativ kann das Rasterfeld 27 statt der ersten Aufnahmen 142 die als erste Eingriffselemente ausgebildeten Stifte 140 aufweisen, die in sich in Richtung der Form 15 erstrecken. In der Alternative ist die erste Aufnahme 142 an der Form 15 vorzugsweise in der Wandung 30 angeordnet. Je nach Ausrichtung der Form 15 greifen in montiertem Zustand der Form 15 an dem Montagebrett 20 jeweils einige der Stifte 140 des Rasterfelds 27 in die erste Aufnahmen 142 ein und befestigen wie oben beschrieben die Form 15 an dem Montagebrett 20 reversibel. Die anderen Stifte 140, die nicht in die erste Aufnahme 142 eingreifen bleiben (zumindest umfangsseitig) frei und/oder sind zumindest abschnittsweise (oberseitig) durch die Form 15 bedeckt.

Figur 11A zeigt eine Schnittansicht durch die in Figur 10 gezeigte Form 15 entlang einer in Figur 10 gezeigten Schnittebene A-A in einer Schließposition der Halteelemente 65, 70.

Das erste Halteelement 65 ist plattenartig ausgebildet und umfasst einen ersten Abschnitt 90 und einen zweiten Abschnitt 95. Das erste Halteelement 65 ist dabei mit einem ersten Abschnitt 90 oberseitig des ersten Wandungsabschnitts 50 angeordnet. Oberseitig des ersten Abschnitts 90 ist das erste Anpresselement 75 angeordnet. Das erste Anpresselement 75 ist mittels des ersten Befestigungsmittels 85 vorzugsweise kraftschlüssig mit dem ersten Wandungsabschnitt 50 verbunden. Dabei stellt das erste Befestigungsmittel 85 eine erste Verspannkraft F_{S1} bereit, mit der das erste Anpresselement 75 das erste Halteelement 65 an die Oberseite des ersten Wandungsabschnitts 50 presst. Dabei ist in der Ausführungsform beispielhaft das erste Anpresselement 75 genauso breit in X-Richtung wie der erste Wandungsabschnitt 50 ausgebildet. Dadurch kann ein zuverlässiges Anpressen des ersten Halteelements 65 durch das erste Anpresselement 75 sichergestellt werden. Ferner kann eine ungewollte Verformung des ersten Halteelements 65 vermieden werden.

Ein erstes freies Ende 100 des ersten Halteelements 70 endet über der Öffnung 35. Mit einem zweiten Abschnitt 95, der an das erste freie Ende 100 des ersten Halteelements 65 angrenzt, bedeckt das erste Halteelement 65 oberseitig die Öffnung 35. Vorzugsweise kann der zweite Abschnitt 95 zumindest abschnittsweise keilförmig ausgebildet sein. Dabei ist von besonderem Vorteil, wenn eine erste Unterseite 105 des ersten Halteelements 65 im Wesentlichen plan ausgebildet ist und vom freien Ende 100 hin zum ersten Wandungsabschnitt 50 oberseitig das erste Halteelement 65 dicker (Z-Richtung) wird.

Das zweite Halteelement 70 ist vorzugsweise gegenüberliegend auf gleicher Höhe, das heißt beispielhaft in einer gemeinsamen XY-Ebene, zu dem ersten Halteelement 65 angeordnet. Das zweite Halteelement 70 ist spiegelsymmetrisch zu der Symmetrieebene 86 angeordnet. Das zweite Halteelement 70 ist oberseitig des zweiten Wandungsabschnitts 55 angeordnet und weist einen dritten Abschnitt 110 und einen vierten Abschnitt 115 auf sowie ist beispielhaft plattenförmig ausgebildet. Mit dem dritten Abschnitt 110 liegt das zweite Halteelement 70 oberseitig des zweiten Wandungsabschnitts 55 an. Oberhalb des dritten Abschnitts 110 ist das zweite Anpresselement 80 angeordnet. Das erste Befestigungsmittel 85 stellt für das zweite Anpresselement 80 eine zweite Anpresskraft F_{S2} bereit, mit der das zweite Anpresselement 80 den zweiten Abschnitt 110 an die Oberseite des zweiten Wandungsabschnitts 55 presst. Dabei ist beispielhaft das zweite Anpresselement 80 genauso breit ausgebildet wie der zweite Wandungsabschnitt 55. Dabei begrenzen das erste Anpresselement 75 und das zweite Anpresselement 80 seitlich einen ersten Spalt 120, der genauso breit ist wie die Öffnung 35.

Der vierte Abschnitt 115 grenzt an ein zweites freies Ende 130 des zweiten Halteelements 70 an. Der vierte Abschnitt 115 ist ebenso wie der zweite Abschnitt 95 keilförmig ausgebildet, wobei eine zweite Unterseite 125 des zweiten Halteelements 70 in einer gemeinsamen Ebene mit der ersten Unterseite 105 des ersten Halteelements 65 angeordnet ist. Das zweite freie Ende 130 endet über der Öffnung 35. Oberseitig verdickt sich der vierte Abschnitt 115 vom zweiten freien Ende 130 hin zum dritten Abschnitt 110.

Der vierte Abschnitt 115 grenzt dabei an ein zweites freies Ende 130 des zweiten Halteelements 70 an.

Das erste freie Ende 100 ist vorzugsweise zu dem zweiten freien Ende 130 des zweiten Halteelements 70 beabstandet angeordnet. Ein Abstand a zwischen dem ersten freien Ende 100 und dem zweiten freien Ende 130 ist dabei vorzugsweise zehnmal kleiner als eine Breite der Öffnung 35 (bezogen auf eine gemeinsame XZ-Ebene). Dadurch deckt die Halteeinrichtung (40) ausschließlich abschnittsweise die Öffnung 35 ab. Das erste freie Ende 100 und das zweite freie Ende 130 können auch in Berührkontakt aneinander liegen.

Besonders günstig ist, wenn das Halteelement 65, 70 einen Werkstoff aufweist, der besonders elastisch und wenigstens um 90° reversibel, vorzugsweise in den Formraum 45, biegbar ist. Dabei ist von besonderem Vorteil, wenn das Halteelement 65, 70 als Werkstoff Silikon aufweist. Ferner kann dadurch die Halteeinrichtung 65, 70 der geometrischen Ausgestaltung des Wandungsabschnitts 50, 55 folgend ausgebildet werden.

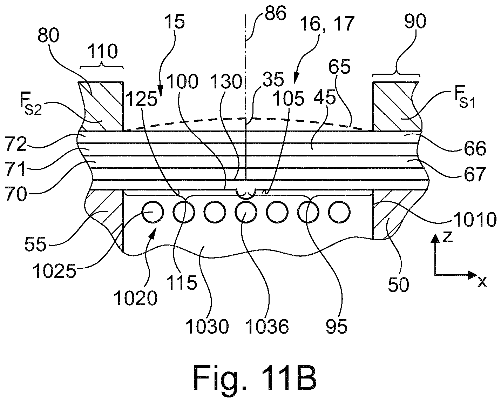

Figur 11B zeigt eine Schnittansicht einer Variante der in Figur 10 gezeigten Form 15 entlang der in Figur 10 gezeigten Schnittebene A-A.

Die Form 15 ist im Wesentlichen identisch zu der in Figur 11A gezeigten Ausgestaltung ausgebildet. Abweichend dazu sind das erste Halteelement 65 und das zweite Halteelement 70 bürstenartig ausgebildet. Dabei weist das erste Halteelement 65 eine erste Bürste 66 mit einer Vielzahl von Bürstenfasern 67 und das zweite Haltehalteelement 70 eine zweite Bürste 71 mit einer Vielzahl von zweiten Bürstenfasern 72 auf.

Dir Bürstenfasern 67, 72 erstrecken sich im Wesentlichen in Querrichtung. Dabei sind der zweite Abschnitt 95 und der vierte Abschnitt 115 breiter als eine halbe Breite der Öffnung 35 in Querrichtung (x-Richtung). Dadurch greifen die Bürsten 66, 71 in die jeweils gegenüberliegende Bürste 66, 71 ein und verschließen die Öffnung 35 oberseitig vollständig.

Auch können die freien Enden 100, 130 wie in Figur 11A gezeigt beabstandet zueinander angeordnet sein.

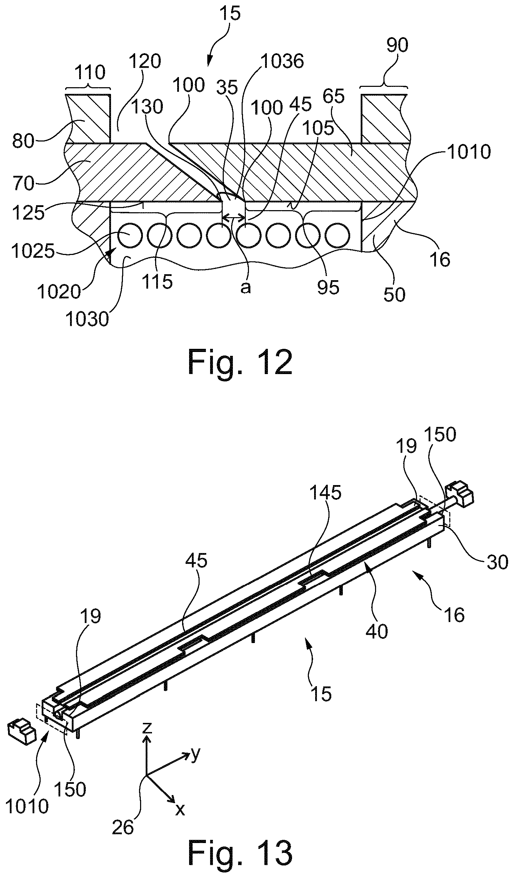

Figur 12 zeigt eine Schnittansicht durch ein erstes Formteil 16 gemäß einer zweiten Ausführungsform entlang der in Figur 10 gezeigten Schnittebene A-A.

Die Form 15 ist ähnlich zu der in den Figuren 9A bis 11 gezeigten Form 15 ausgebildet. Abweichend dazu sind abschnittsweise der zweite Abschnitt 95 und der vierte Abschnitt 115 der Halteelemente 65, 70 oberhalb der Öffnung 35 überlappend angeordnet. Dabei wird unter einer Überlappung verstanden, dass sich diese bei einer Projektion des zweiten Abschnitts 95 und des vierten Abschnitts 115 in eine gemeinsame XY-Ebene zumindest abschnittsweise überdecken.

Die Wandung 30 des ersten Formteils 16 ist einstückig und materialeinheitlich ausgebildet. Dabei weist vorteilhafterweise die Wandung 30 wenigstens einen der folgenden Werkstoffe auf: Polypropylen (PP), Polytetraflourid (PTFE), Polyethylen (PE), vorzugsweise Polyethylen mit stark verzweigten Polymerketten (PE-LD), Polyoxymethylen (POM). Zusätzlich oder alternativ ist auch denkbar, dass die Wandung 30 einen Werkstoff aufweist, der eine besonders niedrige Oberflächenspannung zu Polyurethan und/oder Silikon aufweist.

Figur 13 zeigt eine perspektivische Ansicht eines ersten Formteils 16 gemäß einer dritten Ausführungsform.

Das erste Formteil 16 ist ähnlich zu der in den Figuren 10 bis 12 gezeigten Form 15 ausgebildet. Abweichend dazu weist das erste Formteil 16 gegenüber der in Figur 10 gezeigten Ausgestaltung eine vergrößerte Längserstreckung auf.

Die Halteeinrichtung 40 ist korrespondierend zu der vergrößerten Längserstreckung ausgebildet. Dabei ist zusätzlich, um das zweite Befestigungsmittel 135 oberseitig der Wandung 30 montieren zu können, jeweils eine erste Einbuchtung 145 in der Halteeinrichtung 4, vorzugsweise auf einer zur Öffnung 45 abgewandten Seite, vorgesehen. Dabei erstreckt sich beispielhaft die erste Einbuchtung 145 in der Halteeinrichtung 40 sowohl über das Halteelement 65, 70 als auch das Anpresselement 75, 80. Die erste Einbuchtung 145 führt zu einer schlankeren Ausgestaltung in X-Richtung, also quer zur Längserstreckung der Form 15 und der Halteeinrichtung 40 im Bereich des zweiten Befestigungsmittels 135.

Auch können das erste Befestigungsmittel 85 und das zweite Befestigungsmittel 135 miteinander kombiniert sein, sodass die Form 15 und die Halteeinrichtung 40 über das kombinierte Befestigungsmittel 85, 135 an dem Montagebrett 20 befestigt sind.

Zusätzlich ist gegenüber der in den Figuren 9A bis 12 gezeigten Form 15 an dem Längsende 18 der Form 15 ein Dichtelement 150 (strichliert dargestellt) vorgesehen. Das Dichtelement 150 begrenzt am Längsende 18 den Formraum 45. Das Dichtelement 150 kann dabei plattenartig ausgebildet sein. Dabei ist von besonderem Vorteil, wenn das Dichtelement 150 ausschließlich an dem Längsende 18 angeordnet ist, an dem das Formteil 16 an kein weiteres Formteil 17 angrenzt. Dadurch kann ein Austreten der Ummantelung 1030 bei der Herstellung des Kabelbaums 1010 am Längsende 18 der Form 15 vermieden werden.

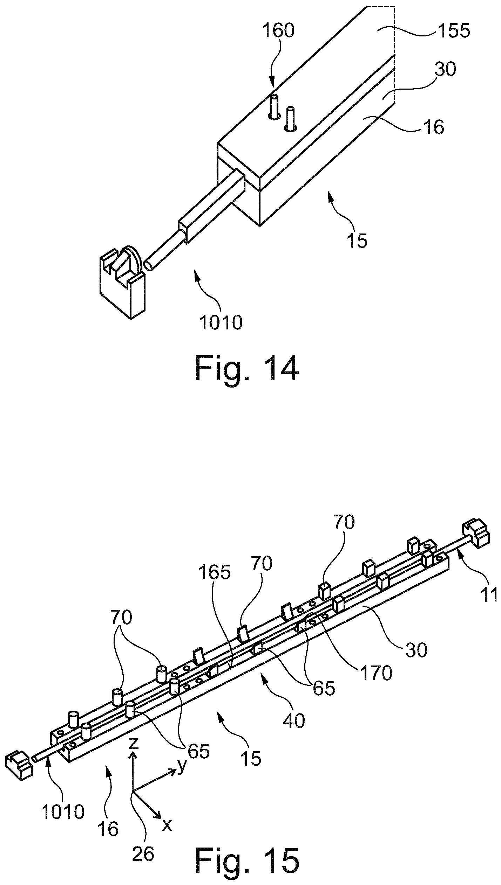

Figur 14 zeigt einen Ausschnitt einer perspektivischen Ansicht der Form 15.

Das erste Formteil 16 kann wie in den Figuren 9A bis 13 beschrieben ausgebildet sein. Die Form 15 weist zusätzlich oberseitig auf der Wandung 30 einen Deckel 155 auf. Der Deckel 155 ist mittels eines dritten Befestigungsmittels 160 mit der Wandung 30 des ersten Formteils 16 verbunden. Der Deckel 155 ist dabei oberseitig der Halteeinrichtung 40 (nicht in Figur 14 dargestellt) angeordnet und verhindert ein Aufbiegen der Halteelemente 65, 70 in eine zum Formraum 45 abgewandte Richtung.

Figur 15 zeigt eine perspektivische Ansicht einer Weiterbildung der in den Figuren 9A bis 14 gezeigten Form 15.

Die Form 15 ist ähnlich zu der in der in den Figur 9A bis 14 gezeigten Form 15 ausgebildet. Abweichend dazu sind in Figur 15 unterschiedliche Varianten der Halteeinrichtung 40 gezeigt.

Die Halteeinrichtung 40 umfasst eine Vielzahl von in regelmäßigen Abständen in Längsrichtung (x-Richtung) angeordneten Halteelementen 65, 70. Die Halteelemente 65, 70 sind jeweils mit dem Wandungsabschnitt 50, 55 verbunden. Das Halteelement 65, 70 erstreckt sich vorzugsweise senkrecht zu einer Oberseite 165 der Wandung 30. Dabei weist in den Varianten der Halteelemente 65, 70 jedes der Halteelemente 65, 70 einen unterschiedlichen Querschnitt in einer Ebene parallel zur Oberseite 165 (xy-Ebene) auf. So kann beispielsweise das Halteelement 65, 70 einen kreisförmigen Querschnitt, einen rechteckförmigen Querschnitt, einen trapezförmigen Querschnitt, einen elliptischen Querschnitt und/oder einen kreisförmigen Querschnitt aufweisen. Auch ist denkbar, dass sich das Halteelement 65, 70 von der Oberseite 165 der Wandung 30 weg hin verjüngt. Dabei ist von besonderem Vorteil, wenn das Halteelement 65, 70 von der Oberseite 165 der Wandung 30 weg einen keilförmigen Querschnitt aufweist, wobei ein freies Ende 170 des Halteelements 65, 70 vom Kabelbaum 1010 zurück versetzt ist. Dadurch kann ein Einlegen von einzelnen Kabeln 1020 des Kabelbündels 1015 erleichtert werden.

In der Ausführungsform ist das erste Halteelement 65 jeweils gegenüberliegend zum zweiten Halteelement 70 angeordnet, sodass das erste und zweite Halteelement 65, 70 jeweils in einer gemeinsamen XZ-Ebene angeordnet sind.

Selbstverständlich können das erste und zweite Halteelement 65, 70 auch jeweils versetzt zueinander angeordnet sein.

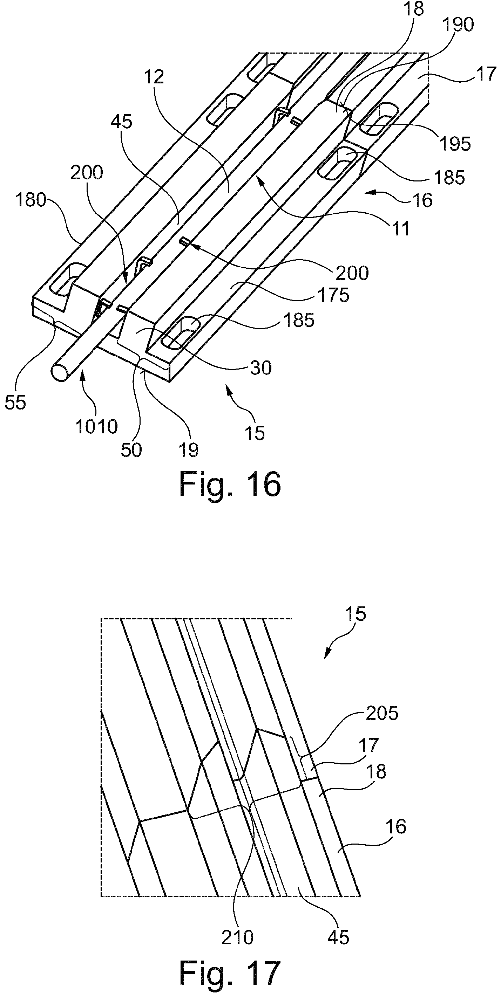

Figur 16 zeigt eine perspektivische Ansicht einer Weiterbildung der in den Figuren 9A bis 15 gezeigten Form 15. Aus Übersichtlichkeitsgründen wird in Figur 16 auf die Darstellung der Halteeinrichtung 40 verzichtet.

Die Form 15 ist ähnlich zu der in den Figuren 9A bis 15 gezeigten Form 15 ausgebildet. Abweichend dazu weist die Wandung 30 am ersten Wandungsabschnitt 50 seitlich einen ersten Steg 175 auf und der zweite Wandungsabschnitt 55 weist seitlich einen zweiten Steg 180 auf. Der Steg 175, 180 erstreckt sich vom Formraum 45 weg und grenzt an die Unterseite 19 des ersten Formteils 16 an. Ferner sind jeweils im Steg 175, 180 vorzugsweise mehrere erste Aussparungen 185 vorgesehen. Die erste Aussparung 185 ist dabei vorzugsweise langlochförmig ausgebildet. Dadurch kann das erste Formteil 16 in Längsrichtung besonders genau positioniert werden, sodass das erste Formteil 16 mit seinem Längsende 18 und der daran angrenzenden Stirnfläche 190 an einer weiteren Stirnfläche 195 des am Längsende 18 angeordneten weiteren Formteils 17 anliegt.

Für die erste Aussparung 185 weist das zweite Befestigungsmittel 135 anstatt des Stifts 140 vorzugsweise eine Schraube auf. Auch kann das Formteil 16, 17, wie in Figur 10 gezeigt, mittels Stifte 140, die beispielsweise im Steg 180, 175 verankert sind, mit dem Montagebrett 20 verbunden sein.

Im Formraum 45 ist das Kabelbündel 1020 des Kabelbaums 11 eingelegt. Dabei wird beispielhaft das Kabelbündel 12 mittels eines ersten Befestigungselements 200, 205 in einer vordefinierten Position gehalten. Das erste Befestigungselement 200 stützt sich auf einer zum Kabelbündel 12 abgewandten Seite an der Wandung 30 ab und ist in die Ummantelung 1030 des Kabelbaums 1010 eingebettet.

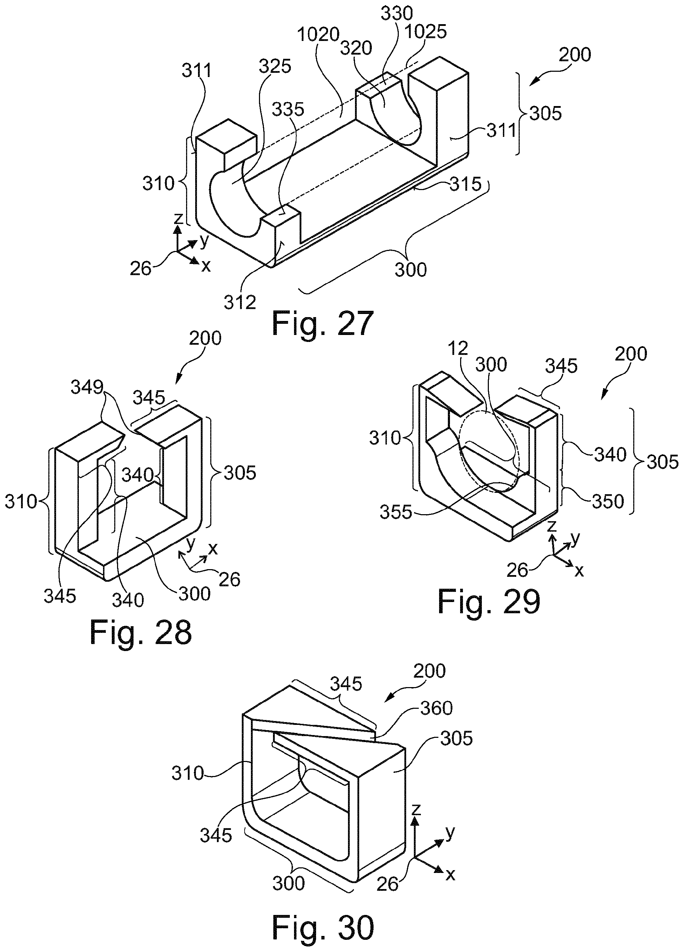

Auf das erste Befestigungselement 200 wird detailliert in den Figuren 27 bis 30 eingegangen.

Figur 17 zeigt einen Ausschnitt einer perspektivischen Ansicht einer Weiterbildung der in Figur 16 gezeigten Form 15.

Die Form 15 ist ähnlich zu der in Figur 16 gezeigten Form 15 ausgebildet. Abweichend dazu weist zur zuverlässigen Verbindung des ersten Formteils 16 mit dem zweiten Formteil 17 das erste Formteil 16 ein zweites Eingriffselement 205 auf und das zweite Formteil 17 umfasst eine korrespondierend zum zweiten Eingriffselement 205 ausgebildete zweite Aufnahme 210. Das zweite Eingriffselement 205 ist dabei stirnseitig am Längsende 18 des ersten Formteils 16 angeordnet. Das zweite Eingriffselement 205 greift in die zweite Aufnahme 210 ein, sodass das erste Formteil 16 formschlüssig mit dem zweiten Formteil 17 gekoppelt ist. Dadurch kann eine zuverlässige Ausrichtung der Formteile 16, 17 zueinander festgelegt werden. Insbesondere wird dabei sichergestellt, dass, wie in Figur 17 gezeigt, der Formraum 45 über einen Übergang zwischen dem ersten Formteil 16 und dem zweiten Formteil 17 geradlinig verläuft und eine Undichtigkeit am Übergang vermieden wird.

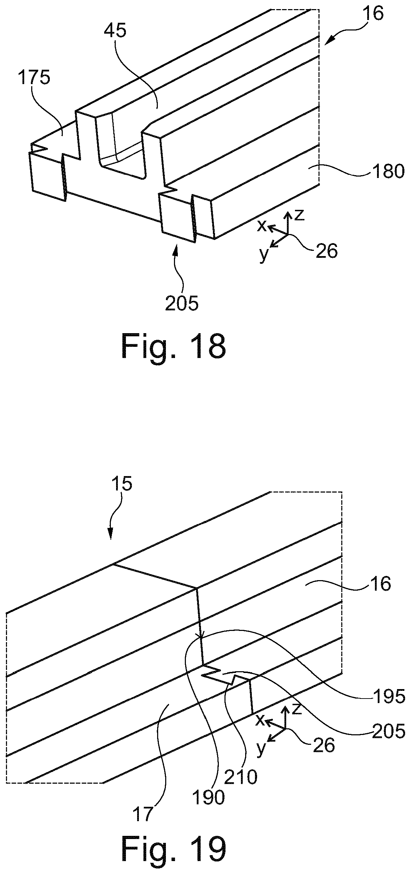

Figur 18 zeigt eine perspektivische Ansicht des ersten Formteils 16 gemäß einer vierten Ausführungsform.

Das erste Eingriffselement 205 ist dabei stirnseitig an den Stegen 175, 180 angeordnet. Dabei ist beispielhaft für die Stirnseite 190 des ersten Formteils 160 je zwei zweite Eingriffselemente 205 vorgesehen, die vorzugsweise jeweils am Steg 175, 180 angeordnet sind. Das erste Eingriffselement 205 weist dabei in einer xy-Ebene geschnitten einen trapezförmigen Querschnitt auf, wobei sich das zweite Eingriffselement 205 von der Stirnseite 190 des ersten Formteils 16 weg verdickt.

Figur 19 zeigt eine perspektivische Ansicht der Form 15 mit dem in Figur 18 gezeigten ersten Formteil 16 und einem zum ersten Formteil 16 korrespondierend ausgebildeten zweiten Formteil 17. Das zweite Formteil 17 weist die zweite Aufnahme 210 auf, die korrespondierend zum in Figur 18 trapezförmig ausgestalteten zweiten Eingriffselement 205 ausgebildet ist. Das zweite Eingriffselement 205 greift in die zweite Aufnahme 210 ein. Aufgrund des trapezförmigen Querschnitts des zweiten Eingriffselements 205 können nur in Z-Richtung die beiden Formteile 16, 17 voneinander gelöst werden. Dadurch kann sichergestellt werden, dass sich zwischen den beiden Stirnflächen 190, 195 kein Spalt ausbildet und somit der Formraum 45 stirnseitig gedichtet ist.

Ferner wird durch die Ausgestaltung der zweiten Aufnahme 210 und des zweiten Eingriffselements 205 sichergestellt, dass die Formteile 16, 17 reversibel voneinander gelöst werden können. Auf diese Weise kann das Formsystem 10 besonders schnell an unterschiedliche Ausgestaltungen zur Herstellung des Kabelbaums 1010 angepasst werden. Dadurch können die Rüstzeiten für das Formsystem 10 reduziert werden.

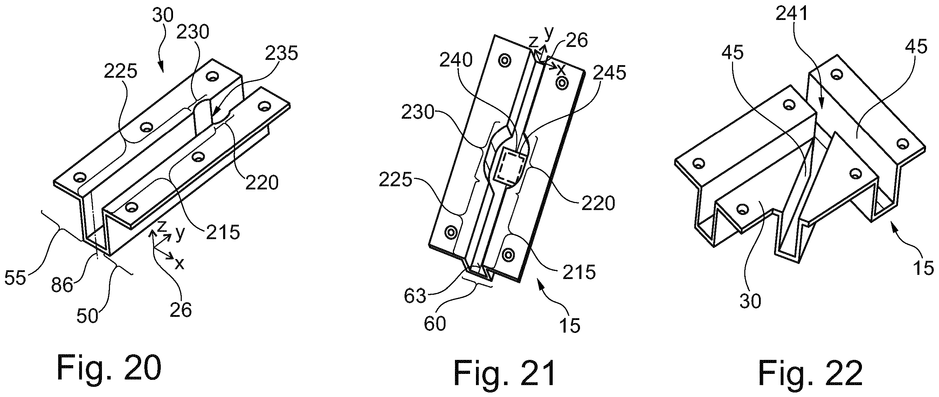

Figur 20 zeigt eine perspektivische Darstellung der Wandung 30 in einer Weiterbildung der in den Figuren 10 bis 19 gezeigten Form 15.

Die Wandung 30 ist hierbei beispielhaft mit geringer Wandstärke ausgebildet. Die Wandung 30 kann beispielsweise tiefgezogen werden.

Der erste Wandungsabschnitt 50 weist einen ersten Wandungsbereich 215 und einen zweiten Wandungsbereich 220 auf. Beispielhaft grenzen der erste Wandungsbereich 215 und der zweite Wandungsbereich 220 in Längsrichtung aneinander an. Der zweite Wandungsabschnitt 55 ist vorzugsweise symmetrisch zur Symmetrieebene 86 zu dem ersten Wandungsabschnitt 50 ausgebildet und weist einen dritten Wandungsbereich 225 und einen vierten Wandungsbereich 230 auf. Der vierte Wandungsbereich 230 ist in Querrichtung (x-Richtung) vorzugsweise gegenüberliegend zu dem zweiten Wandungsbereich 220 und der dritte Wandungsbereich 215 vorzugsweise in Querrichtung gegenüberliegend zum ersten Wandungsbereich 215 angeordnet. Der erste Wandungsbereich 215 und der dritte Wandungsbereich 225 verlaufen vorzugsweise parallel. Der zweite und der vierte Wandungsbereich 220, 230 sind beispielhaft bogenförmig ausgebildet.

Der zweite Wandungsbereich 220 ist gegenüber dem zweiten Wandungsabschnitt 55 zurückversetzt angeordnet. Beispielsweise ist der vierte Wandungsbereich 230 zurückversetzt gegenüber dem zweiten Wandungsbereich 220 verlaufend angeordnet, sodass der Formraum 45 eine Verbreiterung 235 zwischen dem zweiten Wandungsbereich 220 und dem vierten Wandungsbereich 230 aufweist. Die Verbreiterung 235 kann zur Ausbildung der zweiten Ausbuchtung 1120 dienen. Auch ist denkbar, dass wenigstens einer der Wandungsbereiche 220, 225, 230, 235 eine andere geometrische Ausgestaltung aufweist.

Figur 21 zeigt eine perspektivische Darstellung der Wandung 30 in einer Variante zu der in Figur 20 gezeigten Ausgestaltung. Abweichend dazu ist der zweite und vierte Wandungsbereich 220, 230 in Längsrichtung (y-Richtung) länger ausgebildet als in Figur 20. Dabei bilden der zweite Wandungsbereich 220 und der vierte Wandungsbereich 230 eine langlochförmige Verbreiterung 235 aus.

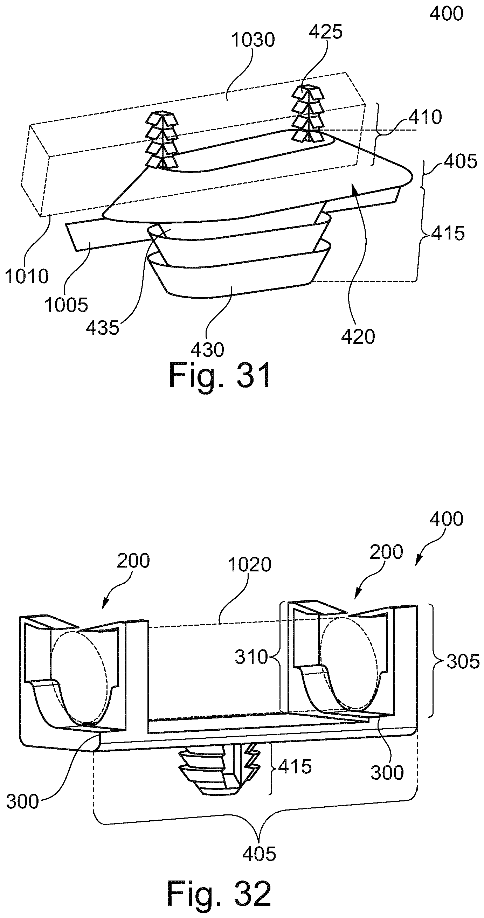

Ferner weist die Wandung 30 im Wandungsboden 60 in Längsrichtung auf Höhe des zweiten und vierten Wandungsbereichs 220, 230 eine zweite Aussparung 240 auf. Die zweite Aussparung 240 ist beispielhaft rechteckförmig ausgebildet und als Durchgangsöffnung im Wandungsboden 60 ausgebildet. Dabei ist die zweite Aussparung 240 ausgebildet, ein zweites Befestigungselement 400 (nicht dargestellt) aufzunehmen. Auf das zweite Befestigungselement 400 wird detailliert in den Figuren 31 und 32 eingegangen. Auch kann die zweite Aussparung 240 in dem Wandungsabschnitt 50, 55 angeordnet sein.

Auch kann die zweite Aussparung 240 korrespondierend zu einem Auswerfer 245 (strichliert in Figur 21 dargestellt) ausgebildet sein, um von unten her nach Herstellung des Kabelbaums 1010 in der Form 15 den Kabelbaum 1010 aus der Form 15 zu drücken. Dadurch kann eine Beschädigung des Kabelbaums 1010, insbesondere der Ummantelung 1030, vermieden werden, da die Ummantelung 1030 im Wesentlichen durch den Auswerfer 245 nur einer Druckbelastung und nicht einer Zugbelastung ausgesetzt ist. Der Auswerfer 245 kann direkt an der Ummantelung 1030 anliegen oder an dem zweiten Befestigungselement 400 angesetzt sein. Wird in die zweite Aussparung 240 kein zweites Befestigungselement 400 während der Herstellung des Kabelbaums 1010 eingelegt, ist über die zweite Aussparung der Formraum 40 nach unten hin offen.

Figur 22 zeigt eine perspektivische Ansicht der Form 15 in einer weiteren Ausführungsform. Die Wandung 30 ist ähnlich zu der in den Figuren 20 und 21 gezeigten Wandung 30 ausgebildet. Abweichend dazu begrenzt die Wandung 30 mehrere Formräume 45, die ineinander an einem gemeinsamen Bereich 241 münden. Dabei ist die geometrische Ausgestaltung, wie in Figur 22 gezeigt, beispielhaft. Die Wandung 30 kann auch andersartig ausgebildet sein. Durch die Mündung der Formräume 45 in dem gemeinsamen Bereich können einzelne Kabelbündel 1020 und/oder Kabel 1025 des Kabelbaums 1010 auf einfache Weise in der Form 15 verzweigt oder zusammengeführt werden.

Figur 23 zeigt einen Längsschnitt durch die Form 15 in einer weiteren Ausführungsform. Die Form 15 ist ähnlich zu der in den Figuren 9A bis 22 gezeigten Form 15 ausgebildet.

Der Wandungsgrund 63 und/oder der Wandungsabschnitt 55, 60 weist einen ersten Wandungsflächenabschnitt 250, einen zweiten Wandungsflächenabschnitt 255 und einen Wandungsflächenübergangsabschnitt 260 auf. Der Wandungsflächenübergangsabschnitt 260 ist in Längsrichtung zwischen dem ersten Wandungsflächenabschnitt 250 und dem zweiten Wandungsflächenabschnitt 255 angeordnet. Der erste Wandungsflächenabschnitt 250 ist dabei tiefer als der zweite Wandungsflächenabschnitt 255 angeordnet. Dabei sind der erste Wandungsflächenabschnitt 250 und der zweite Wandungsflächenabschnitt 255 in jeweils vorzugsweise parallel ineinander versetzt angeordneten Ebenen verlaufend angeordnet. Der Wandungsflächenübergangsabschnitt 260 ist geneigt zum ersten Wandungsflächenabschnitt 250 und zum zweiten Wandungsflächenabschnitt 255 angeordnet. Die Neigung des Wandungsflächenübergangsabschnitts 260 weist vorteilhafterweise einen Winkel α₂ auf, wobei der Winkel α₂ einen Wert aufweist, der kleiner als 45°, insbesondere kleiner als 30°, insbesondere kleiner als 20°, insbesondere kleiner als 15°, insbesondere kleiner als 10°, ist. Durch den Wandungsflächenabschnitt 250, 255 und Wandungsflächenübergangsabschnitt 260 kann der Ummantelungsabschnitt 1400, 1405 und der Übergangsabschnitt 1410 des Kabelbaums 1010 ausgebildet werden.

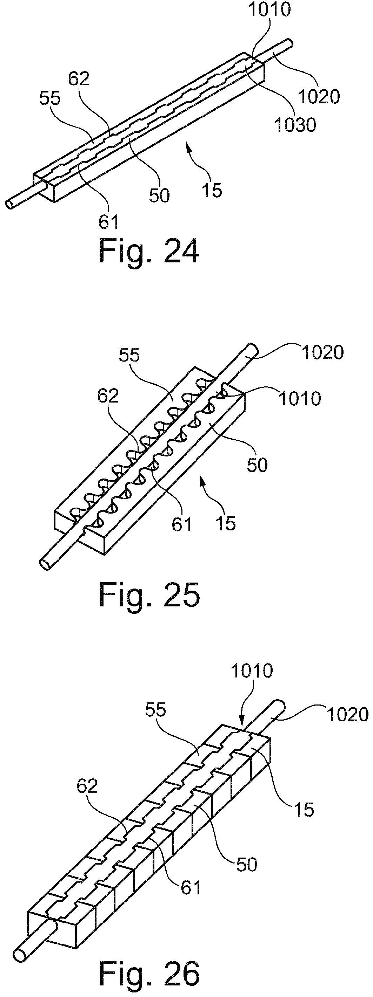

Figur 24 zeigt eine perspektivische Ansicht einer Form 15 in einer weiteren Ausführungsform.

Die Form 15 ist ähnlich zu der in den Figuren 9A bis 23 gezeigten Form 15 ausgebildet. Abweichend dazu ist die Wandungsfläche 61, 62 korrespondierend zur Formung des Profils 1500 des in Figur 6 gezeigten Kabelbaums 1010 wellenförmig ausgebildet.

Figur 25 zeigt eine perspektivische Ansicht einer Form 15 in einer weiteren Ausführungsform. Die Form 15 ist ähnlich zu der in Figur 24 gezeigten Form 15 ausgebildet, wobei die Wandungsfläche 61, 62 korrespondierend zur Formung des Profils 1500 des in Figur 7 gezeigten Kabelbaums 1010 wellenförmig ausgebildet ist.

Figur 26 zeigt eine perspektivische Ansicht einer Form in einer weiteren Ausführungsform.

Die Form 15 ist ähnlich zu der in Figur 24 und Figur 25 gezeigten Form 15 ausgebildet, wobei die Wandungsfläche 61, 62 korrespondierend zur Formung des Profils 1500 des in Figur 8 gezeigten Kabelbaums 1010 rippenförmig ausgebildet ist.

Figur 27 zeigt eine perspektivische Ansicht des ersten Befestigungselements 200 gemäß einer ersten Ausführungsform.

Das erste Befestigungselement 200 weist eine Befestigungsplatte 300, einen ersten Befestigungsbügel 305 und einen zweiten Befestigungsbügel 310 auf. Der erste Befestigungsbügel 305 und der zweite Befestigungsbügel 310 sind in Längsrichtung beabstandet zu einander auf der Befestigungsplatte 300 angeordnet. Die Befestigungsplatte 300 ist in der Ausführungsform beispielhaft plan ausgebildet. Die Befestigungsplatte 300 kann auch gekrümmt geformt sein. Die Befestigungsplatte 300 liegt mit einer zum Befestigungsbügel 305, 310 abgewandten Seitenfläche 315 an der Wandungsfläche 61, 62 und/oder am Wandungsgrund 63 an. Der Befestigungsbügel 305, 310 weist wenigstens eine seitlich angeordnete Anlagefläche 311, 312 auf, die vorzugsweise jeweils an der ihr zugeordneten Wandungsfläche 61, 62 anliegt.

Der erste Befestigungsbügel 305 weist eine dritte Aussparung 320 auf. Der zweite Befestigungsbügel 320 weist eine vierte Aussparung 325 auf. Die dritte und/oder vierte Aussparung 320, 325 ist korrespondierend zu dem Kabelbündel 1020 oder einem oder mehreren Kabeln 1025 des Kabelbündels 1020 ausgebildet. Die dritte und/oder vierte Aussparung 320, 325 kann vorzugsweise kreisförmig ausgebildet sein. Auch sind andere Querschnitte denkbar. Dabei sind die dritte und vierte Aussparung 320, 325 in Längsrichtung gegenüberliegend zueinander angeordnet.

Der erste Befestigungsbügel 305 weist eine erste Einlegeöffnung 330 auf und der zweite Befestigungsbügel 310 weist eine zweite Einlegeöffnung 335 auf. Die erste Einlegeöffnung 330 mündet in der dritten Aussparung 320. Die zweite Einlegeöffnung 335 mündet in der vierten Aussparung 325. Dabei sind die Einlegeöffnungen 330, 335 in Querrichtung (X-Richtung) auf gegenüberliegenden Seiten des jeweiligen Befestigungsbügels 305, 310 angeordnet. Dabei kann die Einlegeöffnung 330, 335 vorzugsweise ein 90° Winkelsegement einschließen. Dadurch wird eine stabile Fixierung und Positionierung des Kabelbündels 1020 und/oder eines oder mehrerer Kabel 1025 des Kabelbündels 1020 mittels des ersten Befestigungselements 200 im Formraum 45 sichergestellt.

Figur 28 zeigt eine perspektivische Ansicht eines ersten Befestigungselements 200 gemäß einer zweiten Ausführungsform.

Das erste Befestigungselement 200 ist ähnlich zu der in Figur 27 gezeigten Ausgestaltung des ersten Befestigungselements 200 ausgebildet. Abweichend dazu ist der Befestigungsbügel 305, 310 vorzugsweise hackenartig ausgebildet. Der erste Befestigungsbügel 305 weist einen ersten Bügelabschnitt 340 und einen zweiten Bügelabschnitt 345 auf. Der erste Bügelabschnitt 340 ist dabei beispielhaft senkrecht zur Befestigungsplatte 300 ausgebildet. Der zweite Bügelabschnitt 345 ist senkrecht zum ersten Bügelabschnitt 340 und beispielhaft parallel zur Befestigungsplatte 300 geführt. Der zweite Befestigungsbügel 310 ist vorzugsweise identisch zum ersten Befestigungsbügel 305 ausgebildet. Abweichend dazu ist der zweite Befestigungsbügel 310 in Längsrichtung (y-Richtung) versetzt zum ersten Befestigungsbügel 305 angeordnet. Dabei erstreckt sich der zweite Bügelabschnitt 345 des zweiten Befestigungsbügels 310 in Richtung des zweiten Bügelabschnitts 345 des ersten Befestigungsbügels 305 (x-Richtung) und ist vorzugsweise parallel zum ersten Befestigungsbügel 305 angeordnet.

Auch kann, wie in Figur 28 gezeigt, an ein freies Ende 349 es zweiten Bügelabschnitts 345 angrenzend der zweite Bügelabschnitt 345 auf einer zur Befestigungsplatte 300 zugewandten Seite keilförmig ausgebildet sein.

Figur 29 zeigt eine perspektivische Darstellung eines ersten Befestigungselements 200 gemäß einer dritten Ausführungsform.

Das erste Befestigungselement 200 ist ähnlich zu dem in Figur 28 gezeigten ersten Befestigungselement 200 ausgebildet. Abweichend dazu ist der zweite Bügelabschnitt 345 des ersten und/oder zweiten Bügelabschnitts 305, 310 geneigt zur Befestigungsplatte 300 angeordnet. Dabei erstreckt sich der zweite Bügelabschnitt 345 schräg nach unten hin zur Befestigungsplatte 300. Dadurch ist ein Winkel zwischen dem ersten Bügelabschnitt 340 und dem zweiten Bügelabschnitt 345 kleiner als 90°. Ferner ist zwischen dem ersten Bügelabschnitt 340 und der Befestigungsplatte 300 ein Auflageabschnitt 350 vorgesehen. Der Auflageabschnitt 350 weist dabei eine vorzugsweise korrespondierend zu dem Kabelbündel 1020 und/oder eines oder mehrere Kabel 1025 des Kabelbündels beispielsweise verrundet ausgebildete Auflagefläche 355 auf einer zum zweiten Bügelabschnitt 345 zugewandten Seite auf. Dadurch kann das Kabelbündel 1020 besonders gut durch die Befestigungsbügel 305, 310 im Formraum 45 fixiert werden.

Figur 30 zeigt eine perspektivische Ansicht eines ersten Befestigungselements 200 gemäß einer vierten Ausführungsform.

Das erste Befestigungselement 200 ist ähnlich zu dem in Figur 28 gezeigten ersten Befestigungselement 200 ausgebildet. Abweichend dazu sind der erste Befestigungsbügel 305 und der zweite Befestigungsbügel 310 in Längsrichtung (y-Richtung) auf gleicher Höhe angeordnet. Ferner verjüngt sich der zweite Bügelabschnitt 345 des ersten Befestigungsbügels 305 hin zulaufend zum zweiten Bügelabschnitt 345 des zweiten Befestigungsbügels 310. Die Verjüngung ist dabei vorzugsweise derart ausgebildet, dass der zweite Bügelabschnitt 345 keilförmig ausgestaltet ist. Der zweite Bügelabschnitt 345 des zweiten Befestigungsabschnitts 310 ist analog zum zweiten Bügelabschnitt 345 des ersten Befestigungsbügels 305 ausgebildet und verjüngt sich bis hin zum zweiten Bügelabschnitt 345 des zweiten Befestigungsbügels 310. Zwischen dem zweiten Bügelabschnitt 345 des ersten Befestigungsbügels 305 und dem zweiten Bügelabschnitt 345 des zweiten Befestigungsbügels 310 ist ein zweiter Spalt 360 angeordnet. Über den zweiten Spalt 360 kann das Kabelbündel 1020 oder einzelne Kabel 1025 des Kabelbündels 1020 eingefügt werden, sodass die Kabel 1025 des Kabelbündels 1020 durch die Befestigungsbügel 305, 310 umgriffen werden. Dadurch kann das Kabelbündel 12 in einer vordefinierten Position im Formraum 45 positioniert werden.

Figur 31 zeigt eine perspektivische Darstellung eines zweiten Befestigungselements 400.

Das zweite Befestigungselement 400 umfasst eine Stützplatte 405, einen ersten Eingriffsabschnitt 410 und einen zweiten Eingriffsabschnitt 415. Der erste Eingriffsabschnitt 410 ist beispielhaft in Figur 31 oberseitig der Stützplatte 405 angeordnet. Der zweite Eingriffsabschnitt 415 ist unterseitig der Stützplatte 405 angeordnet. Die Stützplatte 405 ist verjüngend hin zu ihrer Begrenzungskante 420 nach außen hin ausgebildet. Der erste Eingriffsabschnitt 410 ist tannenbaumartig ausgebildet und weist wenigstens eine schräg zur Befestigungsplatte 405 verlaufende Eingriffsplatte 425 auf, die vorzugsweise an allen Seiten des ersten Eingriffsabschnitts 410 angeordnet ist. Die Eingriffsplatten 425 sind dabei in der Ummantelung 1030 des Kabelbaums 1010 eingebettet. Durch die tannenbaumartige Ausgestaltung kann eine besonders gute Fixierung des Kabelbaums 1010 über die Ummantelung 1030 an dem zweiten Befestigungselement 400 erzielt werden.

Der zweite Eingriffsabschnitt 415 weist vorzugsweise außenseitig eine rippenförmige Struktur 430 auf. Der zweite Eingriffsabschnitt 415 ist dabei ausgebildet, in eine Öffnung 435 in der Struktur 1005 des Fahrzeugbauteils 1000 des Kraftfahrzeugs einzugreifen. Dadurch kann der Kabelbaum 11 besonders gut an der Struktur 1005 fixiert werden.

Besonders von Vorteil ist hierbei, wenn die zweite Aussparung 240 (vgl. Figur 21) korrespondierend zu dem zweiten Eingriffsabschnitt 415 ausgebildet ist und oberseitig die Stützplatte 405 größer ausgebildet ist als die zweite Aussparung 240. Dadurch wirkt die Befestigungsplatte 405 gleichzeitig als Dichtelement und begrenzt den Formraum 45 beispielsweise unterseitig. Ferner wird ein Absatz in der Ummantelung 103 des Kabelbaums 1010, dadurch vermindert, dass die Stützplatte 405 sich nach außen hin verjüngt.

Figur 32 zeigt eine perspektivische Ansicht des zweiten Befestigungselements 400 gemäß einer zweiten Ausführungsform. Das zweite Befestigungselement 400 ist dabei eine Kombination aus dem in Figur 29 gezeigten ersten Befestigungselement 200 und dem in Figur 31 gezeigten zweiten Befestigungselement 400. Dabei ist die Befestigungsplatte 300 des ersten Befestigungselements 200 einstückig und materialeinheitlich mit der Stützplatte 405 des zweiten Befestigungselements 400 ausgebildet. Auf den ersten Eingriffsabschnitt 410 wird beispielhaft verzichtet. Ferner sind auf der Befestigungsplatte 405 beispielhaft zwei erste Befestigungselemente 200 angeordnet. Durch das erste Befestigungselement 200 kann eine Position des Kabelbündels 1020 und/oder wenigstens eines Kabels 1025 im Formraum 45 sichergestellt werden. Gleichzeitig kann nach Fertigstellung des Kabelbaums 1010 der Kabelbaum 1010 zuverlässig über den zweiten Eingriffsabschnitt 415 an der Struktur 1005 fixiert werden. Gleichzeitig geht die Stützplatze 405 vorzugsweise eine stoffschlüssige Verbindung mit der Ummantelung 1030 des Kabelbaums 1010 ein.

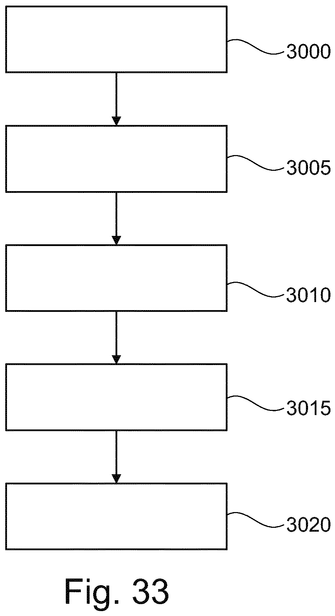

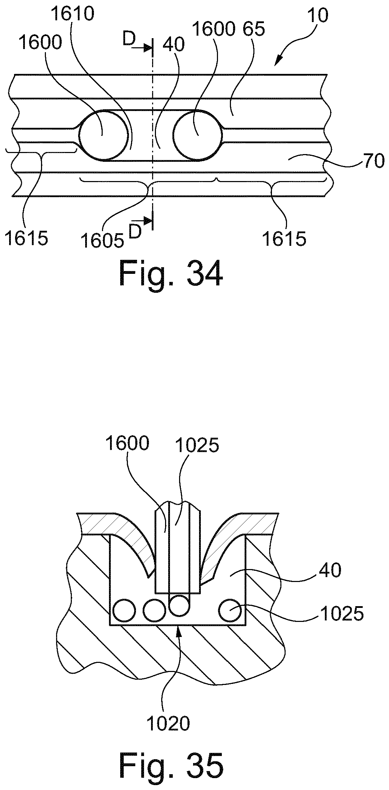

Figur 33 zeigt ein Ablaufdiagramm eines Verfahrens zur Herstellung des Kabelbaums 1010. Figur 34 zeigt eine Draufsicht auf das Formsystem 10 während eines dritten Verfahrensschritts und Figur 35 zeigt eine Schnittansicht entlang einer in Figur 34 gezeigten Schnittebene D-D.

In einem ersten Verfahrensschritt 3000 wird das Formsystem 10 bereitgestellt. Dabei wird auf ein Beheizen der Form 15 verzichtet, sodass die Form 15 im Wesentlichen eine Raumtemperatur aufweist. Ferner wird auf das Einbringen eines Trennmittels in den Formraum 45, insbesondere auf die Wandungsfläche 61, 62 und/oder den Wandungsgrund 63, verzichtet. Dadurch kann vermieden werden, dass die Kabel 1025 mit dem Trennmittel in Kontakt treten und eine einzubringende Ummantelung 1030 sich nicht an den Kabeln 1025 anheften kann.

In einem zweiten Verfahrensschritt 3005, der fakultativ ist, werden das erste Befestigungselement 200 und/oder das zweite Befestigungselement 400 in den Formraum 45 eingebracht. Dabei wird das zweite Eingriffselement 415 in die zweite Aussparung 240 eingesteckt, bis die Stützplatte 405 auf dem Wandungsgrund 63 oder der Wandungsfläche 61, 62 aufliegt. Das erste Befestigungselement 200 wird so eingelegt, dass es oberseitig nicht aus der Form 15 herausragt und/oder mit der Anlagefläche 311, 312 an der Wandungsfläche 61, 62 anliegt oder vorzugweise unterseitig auf dem Wandungsgrund 63 aufsitzt.

In einem dritten Verfahrensschritt 3010 werden die einzelnen Kabel 1025 des Kabelbündels 1020 eingelegt. Dabei wird mittels eines Mittels 1600 das erste Halteelement 65 und das zweite Halteelement 70 derart reversibel aus einer Schließposition in einem ersten Bereich 1605 verformt, dass sich eine Einlegeöffnung 1610 zwischen den Halteelementen 65, 70 ausbildet. Beispielsweise wird das erste und zweite Halteelement 65, 70 in den Formraum 40 gebogen oder vom Formraum 40 weggebogen. Beispielhaft wird die Einlegeöffnung in Längsrichtung durch das Mittel 1600 und in Querrichtung durch das erste und zweite Halteelement 65, 70 begrenzt ist. Das Mittel 1600 kann ein mechanisches Werkzeug und/oder Finger einer menschlichen Hand und/oder das einzulegende Kabel 1025 sein. Das Mittel 1600 ragt oberseitig beispielhaft abschnittsweise in den Formraum 40.

In einen zweiten Bereich 1615, der beidseitig in Längsrichtung an den ersten Bereich 1605 angrenzt sind die Halteelement 65, 70 in der Schließposition. Zusätzlich sichert fakultativ das erste und/oder zweite Befestigungselement 200, 400 eine definierte Position eines vordefinierten Kabels 1025 des Kabelbündels 1020 zu den weiteren Kabeln 1025 des Kabelbündels 1020. Auch kann das erste und/oder zweite Befestigungselement 200, 400, das Kabelbündel 1020 in seiner Position im Formraum positionieren und sichern. Insbesondere kann durch die definierte Anordnung eines oder mehrerer Kabel 1025 im Kabelbündel 1020 eine Erwärmung des Kabelbündels 1020 im Kabelbaum 1010 genau festgelegt werden. Insbesondere wird hierbei eine Überhitzung des Kabelbaums 1010 vermieden. Dadurch werden ein mögliches Selbstentzünden des Kabelbaums 1010, Kurzschlüsse oder andere irreversible Schäden am Kabelbaum 1010 vermieden.

Zusätzlich verhindert in dem zweiten Bereich 1615 die Halteeinrichtung 40, ein Herausrutschen der Kabel 1025 aus dem Formraum 45. Über die Einlegeöffnung 1610 wird zumindest eines der Kabel 1025 des Kabelbündels 1020 dadurch eingelegt, dass das Mittel 1600 in Längsrichtung dem Formraum 40 folgend bewegt wird und parallel dazu das einzulegende Kabel 1025 über die Einlegeöffnung 1610 von oben in den Formraum 40 eingelegt wird. In der Bewegung des Mittels 1600 biegen sich die Halteelemente 65, 70 vor dem Mittel 1600 auf und bilden die Einlegeöffnung 1610 aus und bewegen sich nach Vorbeifahren des Mittels 1600 wieder in ihre Schließposition zurück und bedecken die Öffnung 35 des Formraums 40.

Durch die in den Figuren 10 bis 15 beschriebene geometrische Ausgestaltung der Halteeinrichtung 40 können die Kabel 1025 besonders schnell manuell, aber auch automatisch eingelegt werden, sodass der Kabelbaum 1010 besonders kostengünstig herstellbar ist. Ferner wird das Einlegen des Kabels 1025 in Form 15 mit der Halteeinrichtung 40 als besonders ergonomisch empfunden.

In einem vierten Verfahrensschritt 3015 wird in einem Niederdruckverfahren der Werkstoff der Ummantelung 1030 oberseitig über die Öffnung 35 in den Formraum 45 eingebracht. Dazu können nochmals die Halteelement 65, 70 aus ihrer Schließposition heraus reversibel (beispielsweise in den Formraum 40 oder vom Formraum 40 weg) gebogen um den Werkstoff der Ummantelung 1030 in den Formraum einzubringen.

Dabei wird vorzugsweise zuerst der zweite Werkstoff zur Ausbildung der zweiten Schicht 1205 (vgl. Figur 3) und im Anschluss daran der erste Werkstoff der ersten Schicht 1200 eingebracht. Sowohl der erste als auch der zweite Werkstoff sind beim Einbringen vorzugsweise dünnflüssig. Während der Verarbeitungszeit des Werkstoffes sackt der Werkstoff in Schwerkraftrichtung ab und umschließt dabei die Kabel 1025 des Kabelbündels 1020. Am Wandungsgrund 63 wird der zweite Werkstoff aufstaut und die zweite Schicht 1205 ausgebildet. Von besonderem Vorteil ist hierbei, wenn der erste Werkstoff auf den zweiten Werkstoff dann aufgebracht wird, wenn der zweite Werkstoff bereits sich im Aushärten befindet und vorzugsweise die Verarbeitungszeit des zweiten Werkstoffs bereits abgelaufen ist.

Sollte zumindest ein Teil der Form 15 wie in Figur 5 beschrieben ausgestaltet sein, so ist von besonderem Vorteil, wenn zuerst der Werkstoff oberhalb des ersten Wandungsflächenabschnitts 250 und nach Auffüllen des tiefer gelegenen ersten Wandungsflächenabschnitts 250 in den zweiten Wandungsflächenabschnitt 255 oberhalb des zweiten Wandungsflächenabschnitts 255 eingebracht wird. Zum Schluss wird der Werkstoff oberhalb des Wandungsflächenübergangsabschnitts 260 eingebracht. Dieses Vorgehen hat den Vorteil, dass ein Ablaufen des Werkstoffs vom zweiten Wandungsflächenabschnitt 255 über den Wandungsflächenübergangsabschnitt 260 zum ersten Wandungsflächenabschnitt 250 hin vermieden wird.

Beim Einbringen des Werkstoffs in den Formraum 45 ist von besonderem Vorteil, wenn der Werkstoff der Ummantelung 1030 wellenförmig in einer Ebene parallel zum Wandungsgrund 63 zwischen dem ersten Wandungsabschnitt 50 und dem zweiten Wandungsabschnitt 55 schwankend aufgebracht wird. Dadurch wird ein zuverlässiges Einbetten der Kabel 1025 des Kabelbündels 1020 in der Ummantelung 1030 sichergestellt.

Ist der Werkstoff derartig ausgestaltet, dass er beim Aushärten aufschäumt, verhindert die Halteeinrichtung 40 zusätzlich, dass das Kabelbündel 1020 oberseitig aus dem Formraum 45 gedrückt wird und sichert das Kabelbündel 1020 im Formraum 45. Dadurch wird ein sicheres Umschließen des Kabelbündels 1020 durch die Ummantelung 1030 sichergestellt. Durch den ersten Spalt 120 kann dabei die erste Ausbuchtung 1036 auf einfache Weise mit ausgebildet werden. Dabei ist die erste Ausbuchtung 130 dann zumindest abschnittsweise korrespondierend zu der geometrischen Ausgestaltung der Halteelemente 65, 70 am jeweiligen freien Ende 100, 130 ausgebildet (vgl. Figur 11A und Figur 12). Sind die Halteelemente 65, 70 bürstenartig ausgebildet, so wird die erste Ausbuchtung 1036 dadurch hergestellt, dass beim Aufschäumen der Werkstoff vom Formraum 40 an die Unterseite 105, 125 der Bürsten 66, 71 drückt und die Bürsten 66, 71 dadurch nach oben hin vom Formraum 40 leicht gebogen werden (in Figur 11B strichliert symbolisch dargestellt). Das Signalisierungselement 1038 entspricht einem Abdruck der Bürsten 66, 71. Ist zwischen den Bürsten 66, 71 der Spalt 120 angeordnet, so drängt der Werkstoff der Ummantelung 1030 v.a. in den Spalt 120, so dass v.a. die erste Ausbuchtung 1036 seitlich einen Bürstenabdruck der Bürsten 66, 71 aufweist. Auch kann mittels der Bürsten 66, 71 die Ausgestaltung des Signalisierungselements 1038 als Vertiefung 1040 besonders leicht hergestellt werden.

In einem fünften Verfahrensschritt 3020 wird auf die Form 15 der Deckel 155 aufgesetzt, wobei der Deckel 155 ein Aufbiegen der Halteelemente 65, 70 auf eine vom Formraum 45 abgewandte Seite blockiert. Dadurch wird eine besonders zuverlässige geometrische Ausgestaltung der Ummantelung 1030, insbesondere der ersten Ausbuchtung 1036 auch bei Verwendung von aufschäumenden Werkstoffen sichergestellt.

Es wird darauf hingewiesen, dass zusätzlich zu den eben beschriebenen Verfahrensschritten 3000, 3005, 3010, 3015, 3020 weitere Verfahrensschritte vorgesehen sein können. Auch ist denkbar, dass auf einen Teil der Verfahrensschritte 3000, 3005, 3010, 3015, 3020 verzichtet wird.

Ferner wird darauf hingewiesen, dass die in den Figuren 9A bis 26 beschriebenen unterschiedlichen Ausgestaltungen der Formen 15 und/oder Formteile 16, 17 miteinander kombiniert werden können. Auch können die Merkmale der Befestigungselemente 200, 400 andersartig miteinander kombiniert werden. Auch können die Merkmale des in den Figuren 1 bis 8 beschriebenen Kabelbaums 1010 miteinander kombiniert werden.

### Bezugszeichen

- 10: Formsystem
- 15: Form
- 16: erstes Formteil
- 17: zweites Formteil
- 18: Längsende
- 19: Unterseite des Formteils
- 20: Montagebrett
- 25: Oberseite des Montagebretts
- 26: Koordinatensystem
- 27: Rasterfeld
- 30: Wandung
- 35: Öffnung
- 40: Halteeinrichtung
- 45: Formraum
- 50: erster Wandungsabschnitt
- 55: zweiter Wandungsabschnitt
- 60: Wandungsboden
- 61: erste Wandungsfläche
- 62: zweite Wandungsfläche
- 63: Wandungsgrund
- 65: erstes Halteelement
- 70: zweites Halteelement
- 75: erstes Anpresselement
- 80: zweites Anpresselement
- 85: erstes Befestigungsmittel
- 86: Symmetrieebene
- 90: erster Abschnitt des ersten Halteelements
- 95: zweiter Abschnitt des ersten Halteelements
- 100: erstes freies Ende des ersten Halteelements
- 105: erste Unterseite des ersten Halteelements
- 110: dritter Abschnitt
- 115: vierter Abschnitt
- 120: Spalt
- 125: zweite Unterseite
- 130: zweites freies Ende
- 135: zweites Befestigungsmittel
- 140: Stift (erstes Eingriffselement)
- 141: freies Ende des Stifts
- 142: erste Aufnahme
- 145: erste Einbuchung
- 150: Dichtelement
- 155: Deckel
- 160: drittes Befestigungsmittel
- 165: Oberseite der Wandung
- 170: freies Ende des Halteelements
- 175: erster Steg
- 180: zweiter Steg
- 185: erste Aussparung
- 190: Stirnfläche des Formteils
- 195: Stirnfläche des weiteren Formteils
- 200: erstes Befestigungselement
- 205: zweites Eingriffselement
- 210: zweite Aufnahme
- 215: erster Wandungsbereich
- 220: zweiter Wandungsbereich
- 225: dritter Wandungsbereich
- 230: vierter Wandungsbereich
- 235: Verbreiterung
- 240: zweite Aussparung
- 241: gemeinsamer Bereich
- 245: Auswerfer

- 250: erster Wandungsflächenabschnitt
- 255: zweiter Wandungsflächenabschnitt
- 260: Wandungsflächenübergangsabschnitt

- 300: erste Befestigungsplatte
- 305: erster Befestigungsbügel
- 310: zweiter Befestigungsbügel
- 311: Anlagefläche des Befestigungsbügels
- 312: Anlagefläche des Befestigungsbügels
- 315: Seitenfläche
- 320: dritte Aussparung
- 325: vierte Aussparung
- 330: erste Einlegeöffnung
- 335: zweite Einlegeöffnung
- 340: erster Bügelabschnitt
- 345: zweiter Bügelabschnitt
- 349: freies Ende des zweiten Bügelabschnitts
- 350: Auflageabschnitt
- 355: Auflagefläche
- 360: zweiter Spalt

- 400: zweites Befestigungselement
- 405: Befestigungsplatte
- 410: erstes Eingriffsabschnitt
- 415: zweites Eingriffsabschnitt
- 420: Begrenzungskante
- 425: Eingriffsplatte
- 430: Struktur

- 1000: Karosserie
- 1005: Struktur
- 1006: Haltestruktur
- 1010: Kabelbaum
- 1015: Anlagefläche
- 1020: Kabelbündel
- 1025: Kabel des Kabelbündels
- 1030: Ummantelung
- 1035: Seitenfläche
- 1036: erste Ausbuchtung
- 1037: Oberseite
- 1038: Signalisierungselement
- 1040: Vertiefung
- 1100: erster Raum
- 1105: zweiter Raum
- 1110: Trennwand
- 1115: Öffnung
- 1120: zweite Ausbuchtung
- 1121: Ausbuchtungskontur
- 1122: Öffnungskontur
- 1200: erste Schicht
- 1205: zweite Schicht
- 1210: dritte Schicht
- 1215: Oberflächenstruktur
- 1220: Oberfläche
- 1225: Rippenstruktur
- 1230: Rippe
- 1235: Rippenausnehmung
- 1240: Ausnehmungsgrund der Rippenausnehmung
- 1300: Einbuchtung
- 1305: Einbuchtungskontur
- 1310: Oberfläche der Struktur

- 1400: erster Ummantelungsabschnitt
- 1405: zweiter Ummantelungsschnitt
- 1410: Übergangsabschnitt
- 1415: Seitenfläche des ersten Ummantelungsabschnitts
- 1420: Seitenfläche des zweiten Ummantelungsabschnitts
- 1425: Übergangsfläche

- 1500: Profil
- 1505: erster Profilabschnitt
- 1510: zweiter Profilabschnitt

- 1600: Mittel
- 1605: erster Bereich
- 1610: Einlegeöffnung
- 1615: zweiter Bereich

- 3000: erster Verfahrensschritt
- 3005: zweiter Verfahrensschritt
- 3010: dritter Verfahrensschritt
- 3015: vierter Verfahrensschritt
- 3020: fünfter Verfahrensschritt
- a: Abstand
- b₁: erste Quererstreckung
- b₂: zweite Quererstreckung

## Patentansprüche

1. Kabelbaum (1010) für ein Kraftfahrzeug,
- aufweisend wenigstens ein Kabelbündel (1020) mit wenigstens zwei Kabeln (1025), und eine Ummantelung (1030),
- wobei das Kabelbündel (1020) zumindest abschnittsweise in die Ummantelung (1030) eingebettet ist,
- wobei die Ummantelung (1030) einen ersten Ummantelungsabschnitt (1400) und einen zweiten Ummantelungsabschnitt (1405) aufweist,
- wobei der erste Ummantelungsabschnitt (1400) eine erste Quererstreckung (b₁) zu einer ersten Längserstreckungsrichtung des ersten Ummantelungsabschnitts (1400) aufweist,
- wobei der zweite Ummantelungsabschnitt (1405) eine zweite Quererstreckung (b₂) zu einer zweiten Längserstreckungsrichtung des zweiten Ummantelungsabschnitts (1405) aufweist,
- wobei die erste Quererstreckung (b₁) größer ist als die zweite Quererstreckung (b₂),
- wobei die Ummantelung (1030) einen Übergangsabschnitt (1410) aufweist,
- wobei der Übergangsabschnitt (1410) zwischen dem ersten Ummantelungsabschnitt (1400) und dem zweiten Ummantelungsabschnitt (1405) angeordnet ist,
- wobei der erste Ummantelungsabschnitt (1400) eine erste Seitenfläche (1415) und der zweite Ummantelungsabschnitt (1405) eine zweite Seitenfläche (1420) aufweist,
- wobei der Übergangsabschnitt (1410) eine Übergangsfläche (1425) aufweist, die eine Neigung gegenüber der ersten Seitenfläche (1415) und der zweiten Seitenfläche (1420) aufweist,
- wobei die Neigung einen Winkel (α₁) aufweist, wobei der Winkel (α₁) einen Wert aufweist, der kleiner als 45°, insbesondere kleiner als 30°, insbesondere kleiner als 20°, insbesondere kleiner als 15°, insbesondere kleiner als 10°, ist.

2. Form (15) zur Herstellung eines Kabelbaums (1010) nach Anspruch 1,
- aufweisend eine Wandung (30) und eine Öffnung (35),
- wobei die Wandung (30) zumindest seitlich einen Formraum (45) begrenzt,
- wobei der Formraum (45) oberseitig an die Öffnung (35) grenzt,
- wobei die Wandung (30) einen ersten Wandungsflächenabschnitt (250), einen zweiten Wandungsflächenabschnitt (255) und einen Wandungsflächenübergangsabschnitt (260) aufweist,
- wobei der erste Wandungsflächenabschnitt (250) tiefer als der zweite Wandungsflächenabschnitt (255) angeordnet ist,
- wobei zwischen dem ersten Wandungsflächenabschnitt (250) und dem zweiten Wandungsflächenabschnitt (255) der Wandungsflächenübergangsabschnitt (260) angeordnet ist,
- wobei der Wandungsflächenübergangsabschnitt (260) geneigt gegenüber dem ersten Wandungsflächenabschnitt (250) und dem zweiten Wandungsflächenabschnitt (255) angeordnet ist,
- wobei die Neigung einen Winkel (α₂) aufweist, wobei der Winkel (α₂) einen Wert aufweist, der kleiner als 45°, insbesondere kleiner als 30°, insbesondere kleiner als 20°, insbesondere kleiner als 15°, insbesondere kleiner als 10°, ist.

3. Form (15) nach Anspruch 2,
- wobei der erste Wandungsflächenabschnitt (250) und der zweite Wandungsflächenabschnitt (255) in zwei parallel zueinander angeordneten Ebenen angeordnet sind.

4. Form (15) nach Anspruch 2 oder 3,
- wobei die Wandung (30) wenigstens einen der folgenden Werkstoffe aufweist:
- Polytetraflourid (PTFE),
- Polyoxymethylen (POM).

5. Form (15) nach einem der Ansprüche 2 bis 4,
- wobei die Wandung (30) eine dem Formraum (45) zugewandte Wandungsfläche (61, 62) aufweist,
- wobei die Wandungsfläche (61, 62) zumindest abschnittweise laserpoliert ist.

6. Form (15) nach einem der Ansprüche 2 bis 5,
- wobei an einem Längsende (18) der Wandung (30) ein Dichtelement (150) angeordnet ist, um ein Austreten der Ummantelung (1030) aus dem Formraum (45) zumindest teilweise zu unterbinden.

7. Form (15) nach einem der Ansprüche 2 bis 6,
- aufweisend ein erstes Formteil (16) und ein zweites Formteil (17),
- wobei das erste Formteil (16) an einem Längsende (18) ein Eingriffselement (205) aufweist,
- wobei das zweite Formteil (17) an einem dem Längsende (18) des ersten Formteils (16) zugewandten Längsende (18) des zweiten Formteils (17) eine korrespondierend zum Eingriffselement (205) ausgebildete Aufnahme (210) aufweist,
- wobei das Eingriffselement (205) in die Aufnahme (210) eingreift und formschlüssig das erste Formteil (16) mit dem zweiten Formteil (17) verbindet,
- wobei das Eingriffselement (205) und die Aufnahme (210) derart zueinander ausgebildet sind, dass ein Abziehen in Längsrichtung durch den Eingriff des Eingriffselements (205) in die Aufnahme (210) blockiert ist.

8. Formsystem (10)
- aufweisend eine Form (15) und ein Montagebrett (20),
- wobei die Form (15) nach einem der Ansprüche 2 bis 7 ausgebildet ist,
- wobei die Form (15) auf einer dem Montagebrett (20) zugewandten Seite ein weiteres Eingriffselement (140) und das Montagebrett (20) auf einer der Form (15) zugewandten Seite wenigstens ein Rasterfeld (27) mit mehreren weiteren Aufnahmen (142) aufweist,
- oder wobei die Form (15) auf einer dem Montagebrett (20) zugewandten Seite eine weitere Aufnahme (142) und das Montagebrett (20) auf einer der Form (15) zugewandten Seite ein Rasterfeld (27) mit mehreren weiteren Eingriffselementen (140) aufweist,
- wobei das weitere Eingriffselement (140) und die weitere Aufnahme (142) korrespondierend zueinander angeordnet sind,
- wobei das weitere Eingriffselement (140) in eine der weiteren Aufnahme (142) eingreift und das Montagebrett (20) formschlüssig und reversibel lösbar mit der Form (15) verbindet,
- wobei die anderen weiteren Aufnahmen (142) des Rasterfelds frei bleiben,
oder
- wobei eines der weiteren Eingriffselemente (140) in die weitere Aufnahme (142) eingreift und das Montagebrett (20) formschlüssig und reversibel lösbar mit der Form (15) verbindet,
- wobei die anderen weiteren Eingriffselemente (140) des Rasterfelds frei bleiben.

## Claims

1. Cable harness (1010) for a motor vehicle,
- having at least one cable bundle (1020) having at least two cables (1025), and a sheathing (1030),
- wherein the cable bundle (1020) is embedded at least in portions in the sheathing (1030),
- wherein the sheathing (1030) has a first sheathing portion (1400) and a second sheathing portion (1405),
- wherein the first sheathing portion (1400) has a first transverse extent (b₁) relative to a first longitudinal extent direction of the first sheathing portion (1400),
- wherein the second sheathing portion (1405) has a second transverse extent (b₂) relative to a second longitudinal extent direction of the second sheathing portion (1405),
- wherein the first transverse extent (b₁) is larger than the second transverse extent (b₂),
- wherein the sheathing (1030) has a transition portion (1410),
- wherein the transition portion (1410) is disposed between the first sheathing portion (1400) and the second sheathing portion (1405),
- wherein the first sheathing portion (1400) has a first lateral face (1415) and the second sheathing portion (1405) has a second lateral face (1420),
- wherein the transition portion (1410) has a transition face (1425) which has an inclination relative to the first lateral face (1415) and the second lateral face (1420),
- wherein the inclination has an angle (α₁), wherein the angle (α₁) has a value of less than 45°, in particular less than 30°, in particular less than 20°, in particular less than 15°, in particular less than 10°.

2. Mould (15) for producing a wire harness (1010) according to Claim 1,
- having a wall (30) and an opening (35),
- wherein the wall (30) at least laterally delimits a mould cavity (45),
- wherein the mould cavity (45) on the upper side is adjacent to the opening (35),
- wherein the wall (30) has a first wall face portion (250), a second wall face portion (255) and a wall face transition portion (260),
- wherein the first wall face portion (250) is disposed lower than the second wall face portion (255),
- wherein disposed between the first wall face portion (250) and the second wall face portion (255) is the wall face transition portion (260),
- wherein the wall face transition portion (260) is disposed at an angle relative to the first wall face portion (250) and the second wall face portion (255),
- wherein the inclination has an angle (α₂), wherein the angle (α₂) has a value of less than 45°, in particular less than 30°, in particular less than 20°, in particular less than 15°, in particular less than 10°.

3. Mould(15) according to Claim 2,
- wherein the first wall face portion (250) and the second wall face portion (255) are disposed in two mutually parallel planes.

4. Mould (15) according to Claim 2 or 3,
- wherein the wall (30) comprises at least one of the following materials:
- polytetrafluoride (PTFE),
- polyoxymethylene (POM).

5. Mould (15) according to one of Claims 2 to 4,
- wherein the wall (30) has a wall face (61, 62) facing the mould cavity (45),
- wherein the wall face (61, 62) is laser-polished at least in portions.

6. Mould (15) according to one of Claims 2 to 5,
- wherein a sealing element (150) is disposed on a longitudinal end (18) of the wall (30), so as to at least partially prevent the sheathing (1030) from exiting the mould cavity (45).

7. Mould (15) according to one of Claims 2 to 6,
- having a first mould part (16) and a second mould part (17),
- wherein the first mould part (16) has an engaging element (205) on a longitudinal end (18),
- wherein the second mould part (17) has a receptacle (210), designed so as to correspond to the engaging element (205), on a longitudinal end (18) of the second mould part (17) that faces the longitudinal end (18) of the first mould part (16),
- wherein the engaging element (205) engages in the receptacle (210) and connects the first mould part (16) to the second mould part (17) in a form-fitting manner,
- wherein the engaging element (205) and the receptacle (210) are mutually designed in such a manner that an extraction in the longitudinal direction is blocked by the engagement of the engaging element (205) in the receptacle (210).

8. Mould system (10)
- having a mould (15) and an assembly board (20),
- wherein the mould (15) is designed according to one of Claims 2 to 7,
- wherein the mould (15) on a side facing the assembly board (20) has an additional engaging element (140), and the assembly board (20) on a side facing the mould (15) has at least one grid field (27) having a plurality of additional receptacles (142),
- or wherein the mould (15) on a side facing the assembly board (20) has an additional receptacle (142), and the assembly board (20) on a side facing the mould (15) has a grid field (27) having a plurality of additional engaging elements (140),
- wherein the additional engaging element (140) and the additional receptacle (142) are disposed in a mutually corresponding manner,
- wherein the additional engaging element (140) engages in one of the additional receptacles (142) and releasably connects the assembly board (20) to the mould (15) in a form-fitting and reversible manner,
- wherein the other additional receptacles (142) of the grid field remain vacant,
or
- wherein one of the additional engaging elements (140) engages in the additional receptacle (142) and releasably connects the assembly board (20) to the mould (15) in a form-fitting and reversible manner,
- wherein the other additional engaging elements (140) of the grid field remain vacant.

## Revendications

1. Faisceau de câbles (1010) pour un véhicule automobile,
- comportant au moins un faisceau de câbles (1020) ayant au moins deux câbles (1025), et une gaine (1030),
- le faisceau de câbles (1020) étant intégré au moins par sections dans la gaine (1030),
- la gaine (1030) présentant une première partie de gaine (1400) et une seconde partie de gaine (1405),
- la première partie de gaine (1400) présentant une première extension transversale (b₁) par rapport à une première direction longitudinale de la première partie de gaine (1400),
- la seconde partie de gaine (1405) présentant une seconde extension transversale (b₂) dans une seconde direction longitudinale de la seconde partie de gaine (1405),
- la première extension transversale (b₁) étant supérieure à la seconde extension transversale (b₂),
- la gaine (1030) présentant une partie de transition (1410),
- la partie de transition (1410) étant disposée entre la première partie de gaine (1400) et la seconde partie de gaine (1405),
- la première partie de gaine (1400) présentant une première surface latérale (1415) et la seconde partie de gaine (1405) présentant une seconde surface latérale (1420),
- la partie de transition (1410) présentant une surface de transition (1425) qui présente une certaine inclinaison par rapport à la première surface latérale (1415) et à la seconde surface latérale (1420),
- l'inclinaison formant un angle (α₁), l'angle (α₁) ayant une valeur inférieure à 45°, en particulier inférieure à 30°, en particulier inférieure à 20°, en particulier inférieure à 15°, en particulier inférieure à 10°.

2. Moule (15) pour la fabrication d'un faisceau de câbles (1010) selon la revendication 1,
- présentant une paroi (30) et une ouverture (35),
- la paroi (30) délimitant au moins latéralement un espace de moulage (45),
- l'espace de moulage (45) étant adjacent à l'ouverture (35) du côté supérieur,
- la paroi (30) présentant une première partie de surface de paroi (250), une seconde partie de surface de paroi (255) et une partie de transition de surface de paroi (260),
- la première partie de surface de paroi (250) étant disposée plus bas que la seconde partie de surface de paroi (255),
- la partie de transition de surface de paroi (260) étant disposée entre la première partie de surface de paroi (250) et la seconde partie de surface de paroi (255),
- la partie de transition de surface de paroi (260) étant disposée de manière inclinée par rapport à la première partie de surface de paroi (250) et à la seconde partie de surface de paroi (255),
- l'inclinaison formant un angle (α₂), l'angle (α₂) ayant une valeur inférieure à 45°, en particulier inférieure à 30°, en particulier inférieure à 20°, en particulier inférieure à 15°, en particulier inférieure à 10°.

3. Moule (15) selon la revendication 2,
- la première partie de surface de paroi (250) et la seconde partie de surface de paroi (255) étant disposées dans deux plans parallèles l'un à l'autre.

4. Moule (15) selon la revendication 2 ou 3,
- la paroi (30) étant constituée d'au moins l'un des matériaux suivants :
- polytétrafluorure (PTFE),
- polyoxyméthylène (POM).

5. Moule (15) selon l'une des revendications 2 à 4,
- la paroi (30) présentant une surface de paroi (61, 62) tournée vers l'espace de moulage (45),
- la surface de paroi (61, 62) étant polie au laser au moins par sections.

6. Moule (15) selon l'une des revendications 2 à 5,
- un élément d'étanchéité (150) étant disposé à une extrémité longitudinale (18) de la paroi (30) pour empêcher au moins partiellement la gaine (1030) de sortir de l'espace de moulage (45).

7. Moule (15) selon l'une des revendications 2 à 6,
- comportant une première pièce de moule (16) et une seconde pièce de moule (17),
- la première pièce de moule (16) comportant un élément d'engagement (205) à une extrémité longitudinale (18),
- la seconde pièce de moule (17) présentant, à une extrémité longitudinale (18) de la seconde pièce de moule (17) tournée vers l'extrémité longitudinale (18) de la première pièce de moule (16), un logement (210) conçu de manière à correspondre à l'élément d'engagement (205),
- l'élément d'engagement (205) s'engageant dans le logement (210) et reliant par complémentarité de forme la première pièce de moule (16) à la seconde pièce de moule (17),
- l'élément d'engagement (205) et le logement (210) étant conçus l'un par rapport à l'autre de telle sorte qu'un retrait dans la direction longitudinale soit bloqué par l'engagement de l'élément d'engagement (205) dans le logement (210).

8. Système de moule (10)
- comportant un moule (15) et une planche de montage (20),
- le moule (15) étant conçu selon l'une des revendications 2 à 7,
- le moule (15) comportant, sur un côté tourné vers la planche de montage (20), un autre élément d'engagement (140) et la planche de montage (20) comportant, sur un côté tourné vers le moule (15), au moins une grille (27) dotée de plusieurs autres logements (142),
- ou le moule (15) comportant, sur un côté tourné vers la planche de montage (20), un autre logement (142) et la planche de montage (20) comportant, sur un côté tourné vers le moule (15), une grille (27) dotée de plusieurs autres éléments d'engagement (140),
- l'autre élément d'engagement (140) et l'autre logement (142) étant disposés de manière correspondante l'un par rapport à l'autre,
- l'autre élément d'engagement (140) s'engageant dans l'autre logement (142) et reliant la planche de montage (20) au moule (15) par complémentarité de forme et de manière amovible et réversible,
- les autres logements (142) de la grille restant libres, ou
- l'un des autres éléments d'engagement (140) s'engageant dans l'autre logement (142) et reliant la planche de montage (20) au moule (15) par complémentarité de forme et de manière amovible et réversible,
- les autres éléments d'engagement (140) de la grille restant libres.
